# EUROPEAN PATENT APPLICATION

(11) **EP 4 793 697 A1**
(43) Date of publication of application: **19.08.2026**
(21) Application number: 25837949.4
(22) Date of filing: 20.02.2025
(51) Int. Cl.: G02F 1/167, G02F 1/1676, G02F 1/1677, G02F 1/1335

(54) **DISPLAY MODULE AND DISPLAY DEVICE**

(30) Priority: 29.09.2024 CN 202411386492
(71) Applicant: Shanghai Tianma Microelectronics Co., Ltd., Shanghai 201201 (CN)
(72) Inventor: DING, Yuan, Shanghai 201201 (CN); HE, Yongxin, Shanghai 201201 (CN); LI, Xiao, Shanghai 201201 (CN); ZENG, Yang, Shanghai 201201 (CN); ZHU, Shengtao, Shanghai 201201 (CN); FU, Jujian, Shanghai 201201 (CN); ZHANG, Kaikai, Shanghai 201201 (CN)
(74) Representative: Germain Maureau
(86) International application number: PCT/CN2025/106573
(87) International publication number: WO 2026/066475

(57) **Abstract**

A display module includes a first substrate (11) and a second substrate (12) disposed opposite to each other, an electrophoretic layer (13) located between the first substrate (11) and the second substrate (12), and a light source (14); where the first substrate (11) includes a functional layer (110), the functional layer (110) includes a first surface (110A) and a second surface (110B) disposed opposite to each other and also includes a first side surface (110C) located between the first surface (110A) and the second surface (110B), the first surface (110A) is located on a side of the second surface (110B) facing away from the electrophoretic layer (13), and the light source (14) is disposed opposite to the first side surface (110C).

## Description

This application claims priority to Chinese Patent Application No. 202411386492.2 filed September 29, 2024 with the China National Intellectual Property Administration, the disclosure of which is incorporated herein by reference in its entirety.

### TECHNICAL FIELD

The present disclosure relates to the field of display technology and, in particular, to a display module and a display device.

### BACKGROUND

With the development of digital technology, more and more display devices have entered people's lives, such as electronic paper (EP). The EP imitates the appearance and the reading experience of conventional paper and combines the advantages of a digital display. Moreover, the EP can remain display for a long time even when a power is off and has the advantages of low power consumption and environmental friendliness, so the EP has been increasingly favored by people.

### SUMMARY

The present disclosure provides a display module and a display device to reduce the thickness and achieve the design of lightness and thinness.

According to an aspect of the present disclosure, a display module is provided. The display module includes a first substrate, a second substrate, an electrophoretic layer, and a light source.

The first substrate and the second substrate are disposed opposite to each other.

The electrophoretic layer is located between the first substrate and the second substrate.

The first substrate includes a functional layer. The functional layer includes a first surface and a second surface disposed opposite to each other, and also includes a first side surface located between the first surface and the second surface. The first surface is located on a side of the second surface facing away from the electrophoretic layer.

The light source is disposed opposite to the first side surface.

According to another aspect of the present disclosure, a display device is provided. The display device includes the display module described in the first aspect.

### BRIEF DESCRIPTION OF DRAWINGS

To illustrate solutions in embodiments of the present disclosure more clearly, the drawings used in the description of the embodiments are briefly described below. Apparently, the drawings described below only illustrate part of the embodiments of the present disclosure, and those of ordinary skill in the art may obtain other drawings based on the drawings described below on the premise that no creative work is done.
FIG. 1 is a structure view of a display module according to an embodiment of the present disclosure;
FIG. 2 is a sectional view taken along A-A' in FIG. 1;
FIG. 3 is a partial sectional view of a display module according to an embodiment of the present disclosure;
FIG. 4 is another partial sectional view of a display module according to an embodiment of the present disclosure;
FIG. 5 is another partial sectional view of a display module according to an embodiment of the present disclosure;
FIG. 6 is another partial sectional view of a display module according to an embodiment of the present disclosure;
FIG. 7 is another partial sectional view of a display module according to an embodiment of the present disclosure;
FIG. 8 is another partial sectional view of a display module according to an embodiment of the present disclosure;
FIG. 9 is another partial sectional view of a display module according to an embodiment of the present disclosure;
FIG. 10 is another partial sectional view of a display module according to an embodiment of the present disclosure;
FIG. 11 is another structure view of a display module according to an embodiment of the present disclosure;
FIG. 12 is a sectional view taken along B-B' in FIG. 11;
FIG. 13 is another partial sectional view of a display module according to an embodiment of the present disclosure;
FIG. 14 is another partial sectional view of a display module according to an embodiment of the present disclosure;
FIG. 15 is another partial sectional view of a display module according to an embodiment of the present disclosure;
FIG. 16 is another partial sectional view of a display module according to an embodiment of the present disclosure;
FIG. 17 is another structure view of a display module according to an embodiment of the present disclosure;
FIG. 18 is another structure view of a display module according to an embodiment of the present disclosure;
FIG. 19 is another structure view of a display module according to an embodiment of the present disclosure;
FIG. 20 is another partial sectional view of a display module according to an embodiment of the present disclosure;
FIG. 21 is another partial sectional view of a display module according to an embodiment of the present disclosure;
FIG. 22 is another partial sectional view of a display module according to an embodiment of the present disclosure;
FIG. 23 is another structure view of a display module according to an embodiment of the present disclosure;
FIG. 24 is a sectional view taken along C-C' in FIG. 23;
FIG. 25 is another partial sectional view of a display module according to an embodiment of the present disclosure;
FIG. 26 is another structure view of a display module according to an embodiment of the present disclosure;
FIG. 27 is a sectional view taken along D-D' in FIG. 26;
FIG. 28 is another partial sectional view of a display module according to an embodiment of the present disclosure;
FIG. 29 is another partial sectional view of a display module according to an embodiment of the present disclosure; and
FIG. 30 is a structure view of a display device according to an embodiment of the present disclosure.

### DETAILED DESCRIPTION

To make the solutions of the present disclosure better understood by those skilled in the art, the solutions in embodiments of the present disclosure are described below clearly and completely in conjunction with drawings in the embodiments of the present disclosure. Apparently, the embodiments described below are part, not all, of the embodiments of the present disclosure. Based on the embodiments of the present disclosure, all other embodiments obtained by those of ordinary skill in the art on the premise that no creative work is done are within the scope of the present disclosure.

It is to be noted that terms such as "first" and "second" in the description, claims, and drawings of the present disclosure are used for distinguishing between similar objects and are not necessarily used for describing a particular order or sequence. It is to be understood that the data used in this manner is interchangeable in appropriate cases so that the embodiments of the present disclosure described herein can be implemented in an order not illustrated or described herein. In addition, the terms "including", "having", and any other variations thereof are intended to cover a non-exclusive inclusion. For example, a process, a method, a system, a product, or a device that includes a series of steps or units may include not only the expressly listed steps or units but also other steps or units that are not expressly listed or are inherent to the process, the method, the product, or the device.

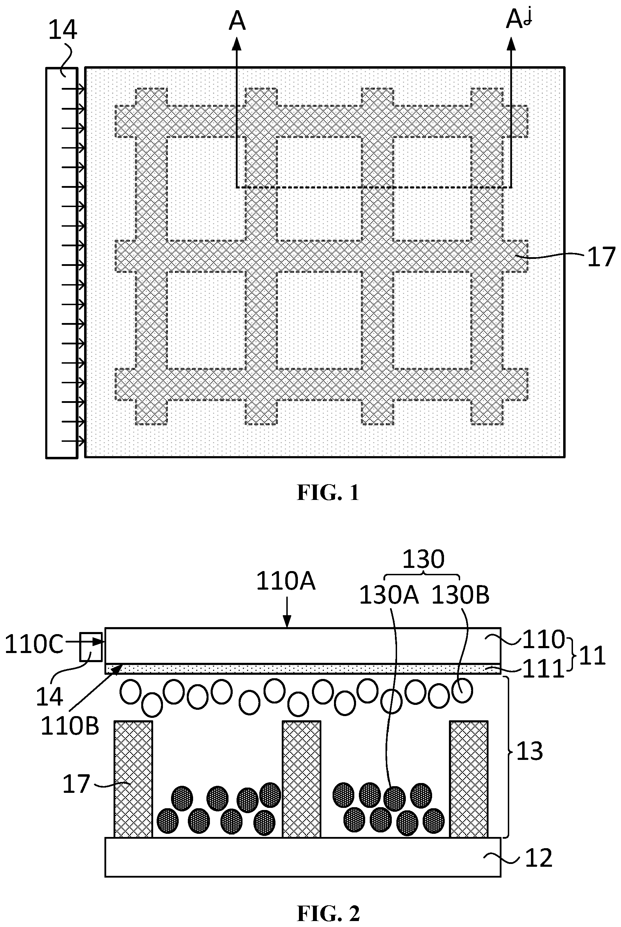

FIG. 1 is a structure view of a display module according to an embodiment of the present disclosure, and FIG. 2 is a sectional view taken along A-A' in FIG. 1. As shown in FIGS. 1 and 2, the display module provided by the embodiments of the present disclosure includes a first substrate 11, a second substrate 12, an electrophoretic layer 13, and a light source 14.

The first substrate 11 and the second substrate 12 are disposed opposite to each other.

The electrophoretic layer 13 is located between the first substrate 11 and the second substrate 12.

The first substrate 11 includes a functional layer 110. The functional layer 110 includes a first surface 110A and a second surface 110B disposed opposite to each other, and also includes a first side surface 110C located between the first surface 110A and the second surface 110B. The first surface 110A is located on a side of the second surface 110B facing away from the electrophoretic layer 13.

The light source 14 is disposed opposite to the first side surface 110C.

Specifically, as shown in FIGS. 1 and 2, the first substrate 11 and the second substrate 12 are disposed opposite to each other. The first substrate 11 and the second substrate 12 may be edge-sealed through a box-forming process to form an enclosed space. The enclosed space is mainly used for carrying the electrophoretic layer 13 to ensure that the electrophoretic layer 13 is effectively protected and supported between the first substrate 11 and the second substrate 12.

The first substrate 11 has a functional layer 110, and the functional layer 110 has sufficient mechanical strength and may provide support and protection, thereby preventing the display module from deformation or damage during use.

With continued reference to FIGS. 1 and 2, the electrophoretic layer 13 may include electrophoretic particles 130 of at least one color. The electrophoretic particles 130 are suspended in a liquid medium, and may move in the liquid medium. Therefore, by applying an electric field to the electrophoretic particles 130, the locations of the electrophoretic particles 130 may be changed, thereby displaying an image.

For example, as shown in FIGS. 1 and 2, a pixel electrode (not shown) and a common electrode layer 111 may be disposed on different sides of the electrophoretic particles 130, respectively. By applying a voltage signal to the pixel electrode, an electric field may be formed between the pixel electrode and the common electrode layer 111. The electric field exerts an attractive or repulsive force on the electrophoretic particles 130 to enable the electrophoretic particles 130 to move under the action of the electric field.

The electrophoretic particles 130 may include first-colored electrophoretic particles 130A with a first color and second-colored electrophoretic particles 130B with a second color. The first color and the second color are different. In this case, the first-colored electrophoretic particles 130A and the second-colored electrophoretic particles 130B carry different charges. When a specific voltage signal is applied to the pixel electrode, the first-colored electrophoretic particles 130A or the second-colored electrophoretic particles 130B carrying corresponding charges move toward or away from the pixel electrode. For example, as shown in FIG. 2, with the pixel electrode being disposed on the second substrate 12 as an example, the first-colored electrophoretic particles 130A move toward the pixel electrode, and the second-colored electrophoretic particles 130B move away from the pixel electrode. In this manner, the second-colored electrophoretic particles 130B appear on the upper surface of the electrophoretic layer 13, and the color displayed at this point is the color of the second-colored electrophoretic particles 130B. Similarly, by changing the voltage signal applied to the pixel electrode, the second-colored electrophoretic particles 130B may move toward the pixel electrode, and the first-colored electrophoretic particles 130A may move away from the pixel electrode. In this manner, the first-colored electrophoretic particles 130A appear on the upper surface of the electrophoretic layer 13, and the color displayed at this point is the color of the first-colored electrophoretic particles 130A.

Therefore, by applying different voltage signals to the pixel electrode, the locations of the electrophoretic particles 130 with different colors in the electrophoretic layer 13 may be precisely controlled so that the electrophoretic particles with different colors appear on the surface of the electrophoretic layer 13 simultaneously or partially to cause a mixture of colors, thereby showing a colorful display effect.

In some embodiments, the electrophoretic layer 13 may include electrophoretic particles 130 with only one color to achieve a monochrome display, which is not specifically limited in the embodiments of the present disclosure.

It is to be noted that the common electrode layer 111 is located in the first substrate 11 in FIG. 2 for the purpose of illustration, but is not limited thereto.

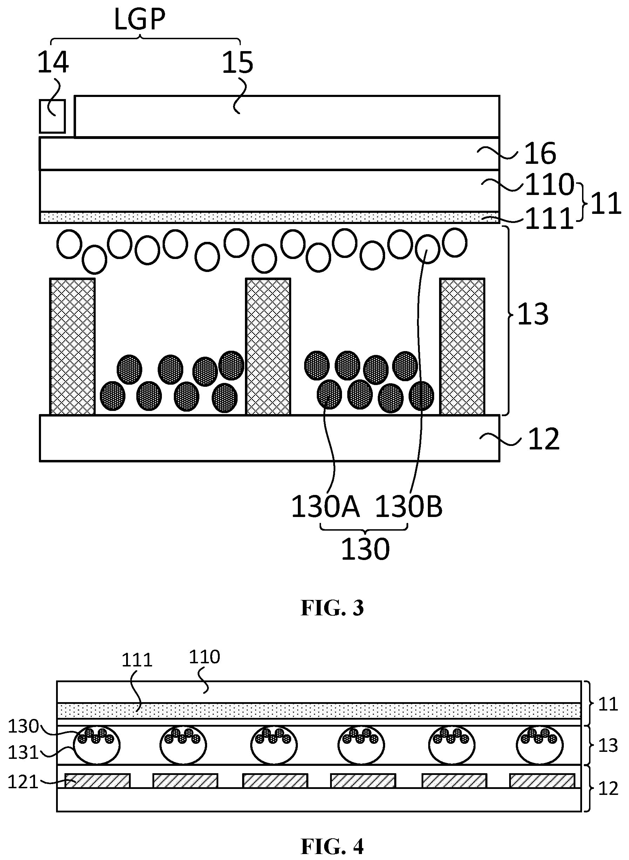

FIG. 3 is a partial sectional view of a display module according to an embodiment of the present disclosure. As shown in FIG. 3, the display module may further include a lighting module LGP. The lighting module LGP includes a light source 14 and a light guide plate 15. The light source 14 is used for emitting a light beam, and the light guide plate 15 is used for evenly illuminating the light beam emitted by the light source 14 on the electrophoretic layer 13. The light beam is reflected to human eyes by the electrophoretic layer 13 so that the human eyes can view the content displayed by the display module in a low-light environment, thereby enhancing the readability of the display module in the low-light environment.

As shown in FIG. 3, the lighting module LGP is disposed in an add-on manner. Specifically, the lighting module LGP is bonded to a side of the first substrate 11 facing away from the electrophoretic layer 13 or a side of the second substrate 12 facing away from the electrophoretic layer 13 through an optical adhesive layer 16.

The inventors have found that the thickness of the lighting module LGP is usually 0.5 mm, and the thickness of the optical adhesive layer 16 needs to be at least 0.15 mm to ensure the firmness of the bonding of the lighting module LGP. Therefore, when the lighting module LGP is disposed in the add-on manner, the thickness of the display module is increased by 0.65 mm and above. There is a problem of large thickness of the display module, which is not conducive to the thinness and lightness of the display module.

Based on the above problem, as shown in FIGS. 1 and 2, in the embodiments, the first surface 110A is a surface of the functional layer 110 away from the electrophoretic layer 13. The second surface 110B is a surface of the functional layer 110 facing the electrophoretic layer 13. The first side surface 110C is a surface between the first surface 110A and the second surface 110B, that is, a surface at an edge of the functional layer 110. By disposing the light source 14 and the first side surface 110C opposite to each other, the light beam emitted by the light source 14 enters the functional layer 110 from the first side surface 110C and is evenly illuminated on the electrophoretic layer 13 under the guide of the functional layer 110. The light beam is reflected to human eyes by the electrophoretic layer 13 so that the human eyes can view the content displayed by the display module in a low-light environment, thereby enhancing the readability of the display module in the low-light environment.

The function of the light guide plate is achieved by the functional layer 110 in the first substrate 11, that is, the light guide function is integrated into the functional layer 110 of the first substrate 11, and no light guide plate structure needs to be additionally disposed, thereby reducing the thicknesses of the optical adhesive layer and the light guide plate, reducing the overall thickness of the display module, and achieving the design of lightness and thinness.

In some embodiments, after the light beam is evenly illuminated on the electrophoretic layer 13 under the guide of the functional layer 110, the light beam may be transmitted to the human eyes by the electrophoretic layer 13 for illumination and enhance the readability of the display module in the low-light environment, which is not specifically limited in the embodiments of the present disclosure.

Further, the transmittance of the functional layer 110 may be greater than or equal to 85%. Thus, the light loss of the light beam entering the electrophoretic layer 13 or reflected by the electrophoretic layer 13 from the functional layer 110 may be reduced, thereby improving the display brightness and the contrast of the display module and improving the display effect.

Optionally, the material of the functional layer 110 includes glass, polycarbonate (PC) or polymethyl methacrylate (PMMA). When the functional layer 110 is prepared by using the above materials, the transmittance of greater than or equal to 85% may be achieved, thereby reducing the light loss. Moreover, a higher mechanical strength can be achieved, thereby providing great support and protection.

Optionally, the thickness of the functional layer 110 is greater than or equal to 0.15 mm to ensure that the light beam emitted by the light source 14 can effectively enter the functional layer 110 through the first side surface 110C of the functional layer 110 while providing sufficient mechanical strength, thereby improving the light utilization rate.

For example, in a direction perpendicular to the plane on which the display module is located, the length of the light emission surface of the light source 14 may be about 0.2 mm. To ensure that all the light beams emitted from the light emission surface of the light source 14 can enter the functional layer 110 through the first side surface 110C of the functional layer 110. The thickness of the functional layer 110 may be set to be greater than or equal to 0.2 mm. That is, the thickness of the functional layer 110 is greater than or equal to the length of the light emission surface of the light source 14, but is not limited thereto. The thickness of the functional layer 110 may be adjusted according to the actual parameters of the light source in the embodiments of the present disclosure.

Further, the thickness of the functional layer 110 is less than or equal to 0.7 mm to reduce the impact of the functional layer 110 on the thickness of the display module.

Optionally, the light source 14 is a light-emitting diode (LED) which has the characteristics of small volume, low power consumption, and long lifetime and is suitable for lighting of the display module, but is not limited thereto.

In some embodiments, the display module may adopt the microencapsulated electrophoretic display technology. Optionally, FIG. 4 is another partial sectional view of a display module according to an embodiment of the present disclosure. As shown in FIG. 4, the electrophoretic layer 13 includes multiple microcapsules 131. Each microcapsule 131 includes electrophoretic particles 130 and an electrophoretic fluid. The first substrate 11 includes a common electrode layer 111, and the second substrate 12 includes a pixel electrode 121. In the direction perpendicular to the plane on which the display module is located, the common electrode layer 111 at least partially overlaps the pixel electrode 121. The first substrate 11, the electrophoretic layer 13, and the second substrate 12 are prepared separately. The second substrate 12 is bonded to the electrophoretic layer 13 through an adhesive layer, and the electrophoretic layer 13 is bonded to the first substrate 11 through an adhesive layer. In some embodiments, the electrophoretic layer 13 may be prepared on the first substrate 11, and the electrophoretic layer 13 and the first substrate 11 are bonded to the second substrate 12 as a whole.

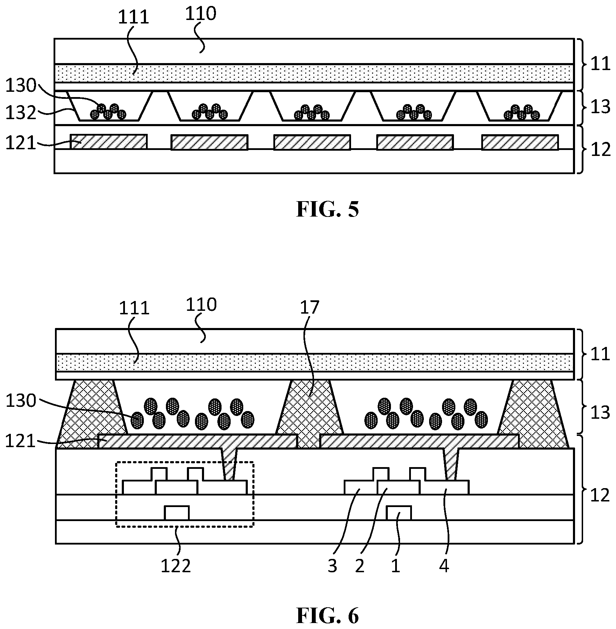

In other embodiments, the display module may adopt the microcup electrophoretic display technology. Optionally, FIG. 5 is another partial sectional view of a display module according to an embodiment of the present disclosure. As shown in FIG. 5, the electrophoretic layer 13 includes multiple microcups 132. Each microcup 132 includes electrophoretic particles 130 and an electrophoretic fluid. The first substrate 11 includes a common electrode layer 111, and the second substrate 12 includes a pixel electrode 121. In the direction perpendicular to the plane on which the display module is located, the common electrode layer 111 at least partially overlaps the pixel electrode 121. In the embodiments, the electrophoretic layer 13 may be prepared separately and bonded to the second substrate 12 and the first substrate 11 respectively through adhesive layers. Alternatively, the electrophoretic layer 13 may be prepared on the first substrate 11, and the electrophoretic layer 13 and the first substrate 11 are bonded to the second substrate 12 as a whole.

In other embodiments, the display module may adopt the cofferdam electrophoretic display technology. For example, FIG. 6 is another partial sectional view of a display module according to an embodiment of the present disclosure. As shown in FIG. 6, after multiple pixel circuits 122 and multiple pixel electrodes 121 are prepared on the second substrate 12, multiple cofferdam structures 17 are prepared on the pixel electrodes 121. The cofferdam structures 17 may be a grid structure to form multiple grid holes. The grid holes formed by the cofferdam structures 17 are filled with electrophoretic particles 130 and an electrophoretic fluid and then encapsulated. The cofferdam structures 17, the electrophoretic particles 130, and the electrophoretic fluid constitute the electrophoretic layer 13. Each pixel circuit 122 may include at least one thin-film transistor. The thin-film transistor may include a gate 1, an active layer 2, a source 3, and a drain 4. The pixel electrode 121 may be electrically connected to the drain 4. The thin-film transistor shown in FIG. 6 is a bottom-gate transistor. In other embodiments, the thin-film transistor may be a top-gate transistor, which is not specifically limited in the embodiments of the present disclosure.

In summary, the display module provided by the embodiments of the present disclosure integrates a light guide function into the functional layer of the first substrate, without the need for an external light guide plate structure, to reduce the thicknesses of an optical adhesive layer and the light guide plate and further reduce the overall thickness of the display module, thereby achieving lightness and thinness of the display module.

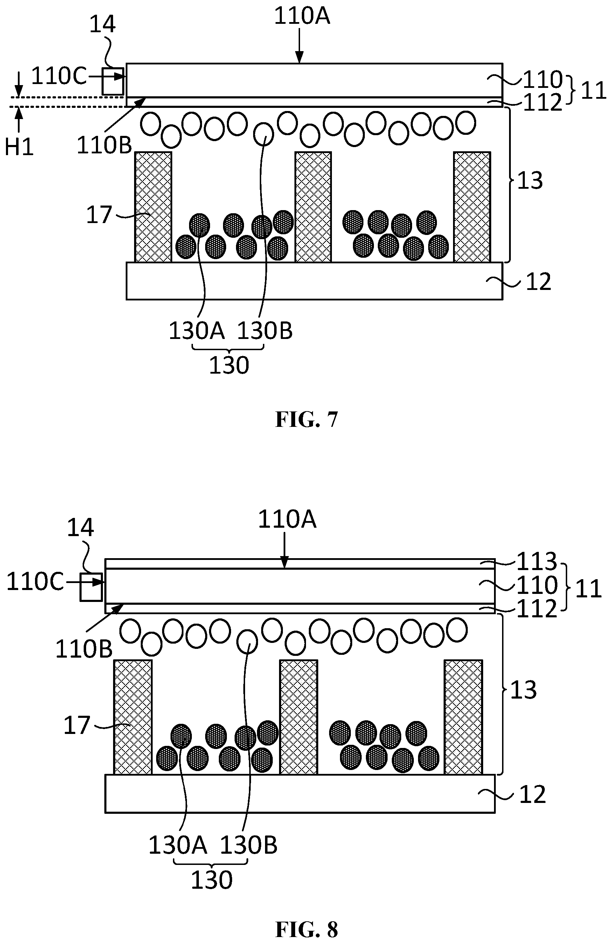

FIG. 7 is another partial sectional view of a display module according to an embodiment of the present disclosure. As shown in FIG. 7, optionally, the first substrate 11 further includes a first low refractive index layer 112. In the direction perpendicular to the plane on which the first substrate 11 is located, the first low refractive index layer 112 is located on a side of the functional layer 110 facing the electrophoretic layer 13, and the first low refractive index layer 112 is in contact with the second surface 110B. The refractive index of the functional layer 110 is n0, and the refractive index of the first low refractive index layer 112 is n1, where n1 < n0.

As shown in FIG. 7, the light source 14 is located at one side of the first side surface 110C. The light beam emitted by the light source 14 enters the interior of the functional layer 110 from the one side of the functional layer 110. In this manner, the light intensity at a location of the functional layer 110 near the light source 14 is relatively high because the light beam just enters the functional layer 110, and the light intensity continues to attenuate as the propagation distance of the light beam in the interior of the functional layer 110 increases. The farther the location away from the light source 14 is, the weaker the light intensity is, thereby resulting in uneven display brightness of the display module.

In the embodiments, the first low refractive index layer 112 is disposed on the second surface 110B of the functional layer 110, and the refractive index n1 of the first low refractive index layer 112 is less than the refractive index n0 of the functional layer 110. Thus, total reflection may be achieved through the refractive index difference between the functional layer 110 and the first low refractive index layer 112. In this manner, more light beams in the functional layer 110 near the light source 14 may undergo total reflection at the interface between the functional layer 110 and the first low refractive index layer 112 so that this part of the light beams may be propagated to the side of the functional layer 110 away from the light source 14, thereby improving the transmission efficiency of the light beam in the interior of the functional layer 110 and improving the light intensity on the side away from the light source 14. Therefore, the light intensity on the side away from the light source 14 in the display module is more consistent with the light intensity on the side near the light source 14, thereby enabling the light beam to be illuminated on the electrophoretic layer 13 more evenly and improving the display brightness uniformity of the display module.

Optionally, 0.2 ≤ n0 - n1 ≤ 0.5.

By setting the refractive index n1 of the first low refractive index layer 112 to be at least 0.2 less than the refractive index n0 of the functional layer 110, the first low reflective index layer 112 and the functional layer 110 may have a sufficient refractive index difference, so that the light beam may undergo total reflection multiple times in the interior of the functional layer 110. In this way, the transmission efficiency of the light beam in the interior of the functional layer 110 is improved, the non-uniformity of the light intensity of the light beam illuminated on the electrophoretic layer 13 is reduced, and the display brightness uniformity of the display module is improved.

Further, if the difference between the refractive index n1 of the first low refractive index layer 112 and the refractive index n0 of the functional layer 110 is too large, a suitable material that satisfies the transmittance requirements or other performance requirements may not be found, thereby failing to ensure the display brightness and the contrast of the display module.

In the embodiments, by setting the difference between the refractive index n1 of the first low refractive index layer 112 and the refractive index n0 of the functional layer 110 to be less than or equal to 0.5, the selection of the materials of the first low refractive index layer 112 and the functional layer 110 may be more extensive and more practical while ensuring a relatively high transmission efficiency of the light beam in the interior of the functional layer 110.

Optionally, the refractive index n0 of the functional layer 110 satisfies the condition that 1.47 ≤ n0 ≤ 1.8. By setting the refractive index n0 of the functional layer 110 to be greater than or equal to 1.47, the functional layer 110 and the first low refractive index layer 112 adjacent thereto may have a relatively large refractive index difference to achieve total reflection easily, thereby improving the transmission efficiency of the light beam in the interior of the functional layer 110 and improving the display uniformity. Moreover, by setting the refractive index n0 of the functional layer 110 to be less than or equal to 1.8, the selection of the material of the functional layer 110 may be more extensive and more practical.

Optionally, the refractive index n1 of the first low refractive index layer 112 satisfies the condition that 1 ≤ n1 ≤ 1.3. By setting the refractive index n1 of the first low refractive index layer 112 to be less than or equal to 1.3, the first low refractive index layer 112 and the functional layer 110 adjacent thereto may have a relatively large refractive index difference to achieve total reflection easily, thereby improving the transmission efficiency of the light beam in the interior of the functional layer 110 and improving the display uniformity. Moreover, by setting the refractive index n1 of the first low refractive index layer 112 to be greater than or equal to 1, the selection of the material of the first low refractive index layer 112 may be more extensive and more practical.

With continued reference to FIG. 7, optionally, the thickness of the first low refractive index layer 112 is H1, where 100 nm ≤ H1 ≤ 2000 nm.

If the thickness of the first low refractive index layer 112 is too thin, an effective total reflection interface may not be formed, and the light beam may easily pass through the first low refractive index layer 112 rather than undergoing total reflection on the surface of the first low refractive index layer 112, thereby affecting the even distribution of the light beam. If the thickness of the first low refractive index layer 112 is too thick, the overall thickness of the display module may be affected. The first low refractive index layer 112 may be formed on the second surface 110B of the functional layer 110 by using a coating process. Thus, if the thickness of the first low refractive index layer 112 is too thick, the difficulty and the manufacturing cost of the coating process may be increased.

In the embodiments, by setting the thickness of the first low refractive index layer 112 to satisfy the condition that 100 nm ≤ H1 ≤ 2000 nm, the first low refractive index layer 112 has a moderate thickness, thereby reducing the process difficulty and the manufacturing cost and achieving the design of lightness and thinness while ensuring that the light beam may be evenly illuminated on the entire electrophoretic layer 13 to improve the display brightness uniformity.

Optionally, the transmittance of the first low refractive index layer 112 is greater than or equal to 90%. Thus, the light loss of the light beam entering the electrophoretic layer 13 or reflected by the electrophoretic layer 13 from the first low refractive index layer 112 may be reduced, thereby improving the display brightness and the contrast of the display module and improving the display effect.

Optionally, the material of the first low refractive index layer 112 includes an overcoat (OC) or other organic materials to achieve the transmittance of 90% and above, but is not limited thereto. In other embodiments, the first low refractive index layer 112 may be made of an inorganic material, which is not specifically limited in the embodiments of the present disclosure.

FIG. 8 is another partial sectional view of a display module according to an embodiment of the present disclosure. As shown in FIG. 8, optionally, the display module provided by the embodiments of the present disclosure further includes a second low refractive index layer 113. In the direction perpendicular to the plane on which the first substrate 11 is located, the second low refractive index layer 113 is located on a side of the functional layer 110 facing away from the electrophoretic layer 13, and the second low refractive index layer 113 is in contact with the first surface 110A. The refractive index of the second low refractive index layer 113 is n2, where n2 < n0.

As shown in FIG. 8, the light source 14 is located at one side of the first side surface 110C, and the light beam emitted by the light source 14 enters the interior of the functional layer 110 from the one side of the functional layer 110. In this case, the light intensity at a location of the functional layer 110 near the light source 14 is relatively high because the light beam just enters the functional layer 110, and the light intensity continues to attenuate as the propagation distance of the light beam in the interior of the functional layer 110 increases. The farther the location away from the light source 14 is, the weaker the light intensity is, thereby resulting in uneven display brightness of the display module.

As shown in FIG. 8, part of the light beam entering the functional layer 110 is directly transmitted out from the first surface 110A of the functional layer 110. This part of light is not transmitted or reflected by the electrophoretic layer 13. Therefore, this part of the light cannot participate in the formation of the display content, thereby causing a certain degree of brightness loss and affecting the overall display effect.

In the embodiments, the second low refractive index layer 113 is disposed on the first surface 110A of the functional layer 110, and the refractive index n2 of the second low refractive index layer 113 is less than the refractive index n0 of the functional layer 110. Thus, total reflection may be achieved through the refractive index difference between the functional layer 110 and the second low refractive index layer 112. In this manner, more light beams in the functional layer 110 near the light source 14 may undergo total reflection at the interface between the functional layer 110 and the second low refractive index layer 113 so that this part of the light beams may be propagated to the side of the functional layer 110 away from the light source 14, thereby improving the transmission efficiency of the light beam in the interior of the functional layer 110 and improving the light intensity on the side away from the light source 14. Therefore, the light intensity on the side away from the light source 14 in the display module is more consistent with the light intensity on the side near the light source 14, thereby enabling the light beam to be illuminated on the electrophoretic layer 13 more evenly and improving the display brightness uniformity of the display module.

Moreover, total reflection occurs at the interface between the functional layer 110 and the second low refractive index layer 113, the light beam directly transmitted out from the first surface 110A of the functional layer 110 may be reduced, and more light beams may be transmitted to the electrophoretic layer 13. Therefore, the light may be more fully utilized, thereby improving the light utilization rate and improving the display effect.

Optionally, 0.2 ≤ n0 - n2 ≤ 0.5.

By setting the refractive index n2 of the second low refractive index layer 113 to be at least 0.2 less than the refractive index n0 of the functional layer 110, the second low reflective index layer 113 and the functional layer 110 may have a sufficient refractive index difference so that the light beam may undergo total reflection multiple times in the interior of the functional layer 110, thereby improving the transmission efficiency of the light beam in the interior of the functional layer 110, reducing the non-uniformity of the light intensity of the light beam illuminated on the electrophoretic layer 13, and improving the display brightness uniformity of the display module.

Further, if the difference between the refractive index n2 of the second low refractive index layer 113 and the refractive index n0 of the functional layer 110 is too large, a suitable material that satisfies the transmittance requirements or other performance requirements may not be found, thereby failing to ensure the display brightness and the contrast of the display module.

In the embodiments, by setting the difference between the refractive index n2 of the second low refractive index layer 113 and the refractive index n0 of the functional layer 110 to be less than or equal to 0.5, the selection of the materials of the second low refractive index layer 113 and the functional layer 110 may be more extensive and more practical while ensuring a relatively high transmission efficiency of the light beam in the interior of the functional layer 110.

Optionally, the refractive index n2 of the second low refractive index layer 113 satisfies the condition that 1 ≤ n2 ≤ 1.3. By setting the refractive index n2 of the second low refractive index layer 113 to be less than or equal to 1.3, the second low refractive index layer 113 and the functional layer 110 adjacent thereto may have a relatively large refractive index difference to achieve total reflection easily, thereby improving the transmission efficiency of the light beam in the interior of the functional layer 110 and improving the display uniformity. Moreover, by setting the refractive index n2 of the second low refractive index layer 113 to be greater than or equal to 1, the selection of the material of the second low refractive index layer 113 may be more extensive and more practical.

With continued reference to FIG. 8, optionally, the first substrate 11 further includes a first low refractive index layer 112. In the direction perpendicular to the plane on which the first substrate 11 is located, the first low refractive index layer 112 is located on a side of the functional layer 110 facing the electrophoretic layer 13, and the first low refractive index layer 112 is in contact with the second surface 110B. The refractive index of the functional layer 110 is n0, and the refractive index of the first low refractive index layer 112 is n1, where n1 < n0, and |n2 - n1| ≤ 0.1.

As shown in FIG. 8, in the direction perpendicular to the plane on which the display module is located, the first low refractive index layer 112 and the second low refractive index layer 113 are disposed on opposite sides of the functional layer 110, respectively. The refractive index n1 of the first low refractive index layer 112 and the refractive index n2 of the second low refractive index layer 113 are both less than the refractive index n0 of the functional layer 110. For the manner of setting the first low refractive index layer 112 and the second low refractive index layer 113, reference may be made to any of the above embodiments, and the details are not repeated here.

Further, when the light beam enters the first low refractive index layer 112 or the second low refractive index layer 113 having a low refractive index from the functional layer 110 having a high refractive index, total reflection occurs if an incident angle is larger than a critical angle, where the critical angle is related to the refractive index.

In the embodiments, by setting the refractive index n1 of the first low refractive index layer 112 and the refractive index n2 of the second low refractive index layer 113 to satisfy the condition that |n2 - n1| ≤ 0.1, the refractive index of the first low refractive index layer 112 may be close to the refractive index of the second low refractive index layer 113. Thus, the critical angle at which the light beam enters the first low refractive index layer 112 from the functional layer 110 is close to the critical angle at which the light beam enters the second low refractive index layer 113 from the functional layer 110. In this manner, regardless of whether the light beam reaches the first surface 110A of the functional layer 110 or the second surface 110B of the functional layer 110, the light beam has a relatively consistent angular condition and follows the same total reflection rule, so that the total reflection angles of the light beam on the first surface 110A and the second surface 110B of the functional layer 110 are more consistent. Therefore, the optical path deviation caused by the large difference between the refractive indexes of the first low refractive index layer 112 and the second low refractive index layer 113 may be avoided, and the optical path in the functional layer 110 has a certain symmetry. The symmetry enables the light beam to be propagated at a longer distance in the functional layer 110, thereby improving the light guide efficiency and the stability of the optical path and enabling the light beam to be evenly distributed in the interior of the functional layer 110.

With continued reference to FIG. 8, optionally, the first substrate 11 further includes a first low refractive index layer 112. In the direction perpendicular to the plane on which the first substrate 11 is located, the first low refractive index layer 112 is located on a side of the functional layer 110 facing the electrophoretic layer 13, and the first low refractive index layer 112 is in contact with the second surface 110B. The refractive index of the functional layer 110 is n0, and the refractive index of the first low refractive index layer 112 is n1, where n1 < n0, and n0 - n2 ≥ n0 - n1.

As shown in FIG. 8, in the direction perpendicular to the plane on which the display module is located, the first low refractive index layer 112 and the second low refractive index layer 113 are disposed on opposite sides of the functional layer 110, respectively. The refractive index n1 of the first low refractive index layer 112 and the refractive index n2 of the second low refractive index layer 113 are both less than the refractive index n0 of the functional layer 110. For the manner of setting the first low refractive index layer 112 and the second low refractive index layer 113, reference may be made to any of the above embodiments, and the details are not repeated here.

Further, when the light beam enters the first low refractive index layer 112 or the second low refractive index layer 113 having a low refractive index from the functional layer 110 having a high refractive index, total reflection occurs if an incident angle is larger than a critical angle, where the critical angle is related to the refractive index.

In the embodiments, by setting the refractive index difference (n0 - n2) between the functional layer 110 and the second low refractive index layer 113 to be equal to the refractive index difference (n0 - n1) between the functional layer 110 and the first low refractive index layer 112, that is, by setting the refractive index n1 of the first low refractive index layer 112 to be equal to the refractive index n2 of the second low refractive index layer 113, the critical angle at which the light beam enters the first low refractive index layer 112 from the functional layer 110 is equal to the critical angle at which the light beam enters the second low refractive index layer 113 from the functional layer 110. In this manner, regardless of whether the light beam reaches the first surface 110A of the functional layer 110 or the second surface 110B of the functional layer 110, the light beam has a relatively consistent angular condition and follows the same total reflection rule so that the total reflection angles of the light beam on the first surface 110A and the second surface 110B of the functional layer 110 are more consistent. Therefore, the optical path in the functional layer 110 has a certain symmetry. The symmetry enables the light beam to be propagated at a longer distance in the functional layer 110, thereby improving the light guide efficiency and the stability of the optical path and enabling the light beam to be evenly distributed in the interior of the functional layer 110.

In other embodiments, the refractive index difference (n0 - n2) between the functional layer 110 and the second low refractive index layer 113 may be set to be greater than the refractive index difference (n0 - n1) between the functional layer 110 and the first low refractive index layer 112. The refractive index difference (n0 - n1) between the functional layer 110 and the first low refractive index layer 112 is small, which means that the critical angle at which total reflection occurs is large, and the light beam is less likely to undergo total reflection but is easily transmitted from the functional layer 110 to the first low refractive index layer 112. The refractive index difference (n0 - n2) between the functional layer 110 and the second low refractive index layer 112 is larger, which means that the critical angle of total reflection is smaller. In this case, the light beam is not prone to total reflection, and is relatively easy to be transmitted from the functional layer 110 to the second low refractive index layer 113. Through the above setting, the light beam is enabled to be transmitted to the electrophoretic layer 13 through the first low refractive index layer 112, and more light is transmitted or reflected by the electrophoretic layer 13, thereby improving the definition of the display content. Moreover, the light beam directly transmitted out from the first surface 110A of the functional layer 110 may be reduced, thereby improving the light utilization rate and improving the display effect.

With continued reference to FIG. 8, optionally, the first substrate 11 further includes a first low refractive index layer 112. In the direction perpendicular to the plane on which the first substrate 11 is located, the first low refractive index layer 112 is located on a side of the functional layer 110 facing the electrophoretic layer 13, and the first low refractive index layer 112 is in contact with the second surface 110B. The refractive index of the functional layer 110 is n0, and the refractive index of the first low refractive index layer 112 is n1, where n1 < n0, and n0 - n2 ≤ n0 - n1.

For the manner of setting the first low refractive index layer 112 and the second low refractive index layer 113, reference may be made to any of the above embodiments, and the details are not repeated here.

In the embodiments, the refractive index difference n0 - n2 between the functional layer 110 and the second low refractive index layer 113 may be set to be equal to the refractive index difference n0 - n1 between the functional layer 110 and the first low refractive index layer 112. The beneficial effect of this setting may refer to the above embodiments, and the details are not repeated here.

In other embodiments, the refractive index difference (n0 - n2) between the functional layer 110 and the second low refractive index layer 113 may be set to be less than the refractive index difference (n0 - n1) between the functional layer 110 and the first low refractive index layer 112. The second low refractive index layer 113 may serve as an adhesive layer to bond with other film layers. In this case, there are certain requirements for the viscosity of the second low refractive index layer 113. Therefore, if the refractive index difference (n0 - n2) between the functional layer 110 and the second low refractive index layer 113 is too large, it may be difficult to find a suitable material that satisfies both the transmittance requirements and the viscosity requirements. In the embodiments, by setting the refractive index difference (n0 - n2) between the functional layer 110 and the second low refractive index layer 113 to be relatively small, the selection of the material of the second low refractive index layer 113 may be more extensive and more practical, thereby reducing the cost and making implementation easy.

Optionally, |n1 - n2| ≤ |n0 - n1| and/or |n1 - n2| ≤ |n0 - n2|.

By setting the absolute value |n1 - n2| of the refractive index difference between the first low refractive index layer 112 and the second low refractive index layer 113 to be less than or equal to the absolute value |n0 - n1| of the refractive index difference between the functional layer 110 and the first low refractive index layer 112, the reflective index difference between the first low refractive index layer 112 and the second low refractive index layer 113 is prevented from being too large. Thus, the critical angle at which the light beam enters the first low refractive index layer 112 from the functional layer 110 is close to the critical angle at which the light beam enters the second low refractive index layer 113 from the functional layer 110. In this manner, the total reflection angles of the light beam on the first surface 110A and the second surface 110B of the functional layer 110 are more consistent. Therefore, the optical path deviation caused by the large difference in the refractive indexes of the first low refractive index layer 112 and the second low refractive index layer 113 may be avoided, and the optical path in the functional layer 110 has a certain symmetry. The symmetry enables the light beam to be propagated at a longer distance in the functional layer 110, thereby improving the light guide efficiency and the stability of the optical path and enabling the light beam to be evenly distributed in the interior of the functional layer 110.

Similarly, by setting the absolute value |n1 - n2| of the refractive index difference between the first low refractive index layer 112 and the second low refractive index layer 113 to be less than or equal to the absolute value |n0 - n2| of the refractive index difference between the functional layer 110 and the second low refractive index layer 113, the reflective index difference between the first low refractive index layer 112 and the second low refractive index layer 113 may be prevented from being too large. In this manner, the total reflection angles of the light beam on the first surface 110A and the second surface 110B of the functional layer 110 are more consistent, and the optical path in the functional layer 110 has a certain symmetry, thereby improving the light guide efficiency and the stability of the optical path and enabling the light beam to be evenly distributed in the interior of the functional layer 110.

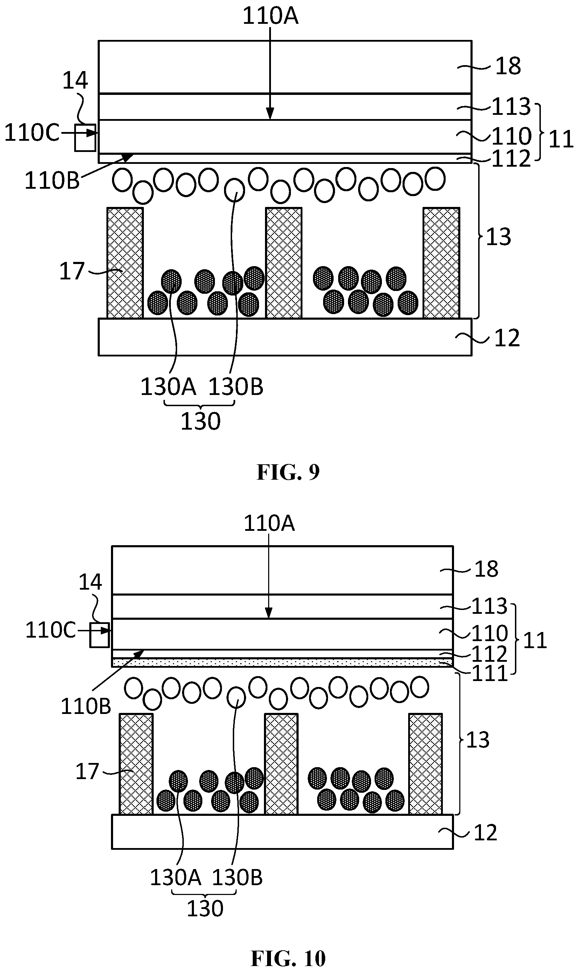

FIG. 9 is another partial sectional view of a display module according to an embodiment of the present disclosure. As shown in FIGS. 8 and 9, optionally, the first substrate 11 further includes a first low refractive index layer 112. In the direction perpendicular to the plane on which the first substrate 11 is located, the first low refractive index layer 112 is located on a side of the functional layer 110 facing the electrophoretic layer 13, and the first low refractive index layer 112 is in contact with the second surface 110B. The thickness of the second low refractive index layer 113 is greater than or equal to the thickness of the first low refractive index layer 112.

For the manner of setting the first low refractive index layer 112 and the second low refractive index layer 113, reference may be made to any of the above embodiments, and the details are not repeated here.

In the embodiments, as shown in FIG. 8, the thickness of the second low refractive index layer 113 may be set to be equal to the thickness of the first low refractive index layer 112. In this manner, the reflection and transmission of the light beam by the second low refractive index layer 113 are more consistent with the reflection and transmission of the light beam by the first low refractive index layer 112 so that the light beam may be propagated at a longer distance in the functional layer 110, thereby improving the light guide efficiency and the stability of the optical path and enabling the light beam to be evenly distributed in the interior of the functional layer. Moreover, when the second low refractive index layer 113 and the first low refractive index layer 112 have the same thickness, the second low refractive index layer 113 and the first low refractive index layer 112 may be prepared by using the same process parameters and the same equipment, thereby simplifying the preparation process and reducing the manufacturing difficulty and the manufacturing cost.

In other embodiments, as shown in FIG. 9, the thickness of the second low refractive index layer 113 may be set to be larger than the thickness of the first low refractive index layer 112. Since the second low refractive index layer 113 may serve as an adhesive layer to bond with other film layers, by setting the second low refractive index layer 113 to have a larger thickness, the second low refractive index layer 113 may have sufficient bonding strength, thereby improving the reliability of bonding.

For example, as shown in FIG. 9, the display module may further include a cover plate 18. The cover plate 18 is located on a side of the second low reflective index layer 113 away from the electrophoretic layer 13. The cover plate 18 may be used for protecting the display module from being affected by the external environment, improving the overall mechanical strength of the display module, and reducing the risk of damage when the display module is impacted by external forces during use. The cover plate 18 is bonded to the functional layer 110 through the second low refractive index layer 113. In this manner, the second low refractive index layer 113 integrates a low refractive index and a bonding function, and no additional adhesive layer needs to be set on the second low refractive index layer 113, thereby reducing the number of film layers of the display module and reducing the overall thickness of the display module.

FIG. 10 is another partial sectional view of a display module according to an embodiment of the present disclosure. As shown in FIG. 10, optionally, the first substrate 11 further includes a common electrode layer 111. The common electrode layer 111 is located on a side of the functional layer 110 facing the electrophoretic layer 13. The refractive index of the common electrode layer 111 is n3, where n3 > n1.

Specifically, as shown in FIG. 10, a common electrode layer 111 is disposed on the first substrate 11, and a pixel electrode (not shown) may be disposed on the second substrate 12. By applying a voltage signal to the pixel electrode, an electric field may be formed between the pixel electrode and the common electrode layer 111. The electric field exerts an attractive or repulsive force on the electrophoretic particles 130 in the electrophoretic layer 13 to move the electrophoretic particles 130 under the action of the electric field, thereby achieving image display.

As shown in FIG. 10, the common electrode layer 111 is located on a side of the functional layer 110 facing the electrophoretic layer 13. In this manner, the common electrode layer 111 has a relatively close distance to the pixel electrode on the second substrate 12. The intensity of the electric field formed by the common electrode layer 111 and the pixel electrode is improved, and the moving speed of the electrophoretic particles 130 is accelerated, thereby improving the display refresh rate of the display module.

With continued reference to FIG. 10, after the light beam emitted by the light source 14 is guided by the functional layer 110, the light beam needs to be transmitted through the first low refractive index layer 112 and the common electrode layer 111 sequentially and then illuminated on the electrophoretic layer 13.

In the embodiments, by setting the refractive index n3 of the common electrode layer 111 to be greater than the refractive index n1 of the first low refractive index layer 112, the light beam entering the first low refractive index layer 112 may be more easily transmitted through the common electrode layer 111. In this manner, the light emission efficiency of the functional layer 110 toward the electrophoretic layer 13 is improved, and more light is transmitted or reflected by the electrophoretic layer 13, thereby improving the definition of the display content.

Moreover, by setting the refractive index n3 of the common electrode layer 111 to be greater than the refractive index n1 of the first low refractive index layer 112, the incident angle of the light beam incident on the electrophoretic layer 13 may be reduced, and the light beam illuminated on the electrophoretic layer 13 is closer to the normal. Thus, the emergence angle of the light beam reflected or transmitted by the electrophoretic layer 13 to the human eyes may be improved, and the numbers of reflections and scattering of the light beam in the electrophoretic layer 13 may be reduced, thereby reducing the light loss and improving the definition and the contrast of the display content.

Optionally, 0.2 ≤ n3 - n1 ≤ 0.5.

By setting the refractive index n3 of the common electrode layer 111 to be at least 0.2 greater than the refractive index n1 of the first low refractive index layer 112, the common electrode layer 111 and the first low refractive index layer 112 may have a sufficient refractive index difference so that the light beam entering the first low refractive index layer 112 may be more easily transmitted through the common electrode layer 111. In this manner, the light emission efficiency of the functional layer 110 toward the electrophoretic layer 13 is improved, and more light is transmitted or reflected by the electrophoretic layer 13, thereby improving the definition of the display content.

Moreover, the incident angle of the light beam incident on the electrophoretic layer 13 may further be reduced, and the light beam illuminated on the electrophoretic layer 13 is closer to the normal. Thus, the emergence angle of the light beam reflected or transmitted by the electrophoretic layer 13 to the human eyes may be improved, and the numbers of reflections and scattering of the light beam in the electrophoretic layer 13 may be reduced, thereby reducing the light loss and improving the definition and the contrast of the display content.

Further, by setting the difference between the refractive index n3 of the common electrode layer 111 and the refractive index n1 of the first low refractive index layer 112 to be less than or equal to 0.5, the selection of the materials of the common electrode layer 111 and the first low refractive index layer 112 may be more extensive and more practical.

Optionally, the refractive index n3 of the common electrode layer 111 satisfies the condition that 1.5 ≤ n3 ≤ 1.8. As shown in FIG. 10, by setting the refractive index n3 of the common electrode layer 111 to be greater than or equal to 1.5, the common electrode layer 111 and the first low refractive index layer 112 adjacent thereto may have a relatively large refractive index difference, and the light emission efficiency of the functional layer 110 toward the electrophoretic layer 13 is improved, thereby improving the definition and the contrast of the display content. Moreover, by setting the refractive index n3 of the common electrode index layer 111 to be less than or equal to 1.8, the selection of the material of the common electrode index layer 111 may be more extensive and more practical.

Optionally, the thickness of the common electrode layer 111 is greater than or equal to 3nm to provide great conductivity, thereby ensuring the intensity of the formed electric field.

Moreover, the thickness of the common electrode layer 111 is less than or equal to 15nm to ensure low light absorption of the common electrode layer 111 and avoid a display color being yellowish, thereby enabling the common electrode layer 111 to have a relatively high transmittance.

For example, the thickness of the common electrode layer 111 may be 8nm to provide great conductivity without affecting the display color and the transmittance and thus enhance the color expression and the contrast of the display content. The thickness of the common electrode layer 111 is not limited thereto. Those skilled in the art may set the thickness of the common electrode layer 111 according to actual requirements.

Optionally, the material of the common electrode layer 111 may include indium tin oxide (ITO), indium-doped zinc oxide (IZO), zinc oxide (ZnO) or indium oxide (In₂O₃) to have both great conductivity and transparency, but is not limited thereto.

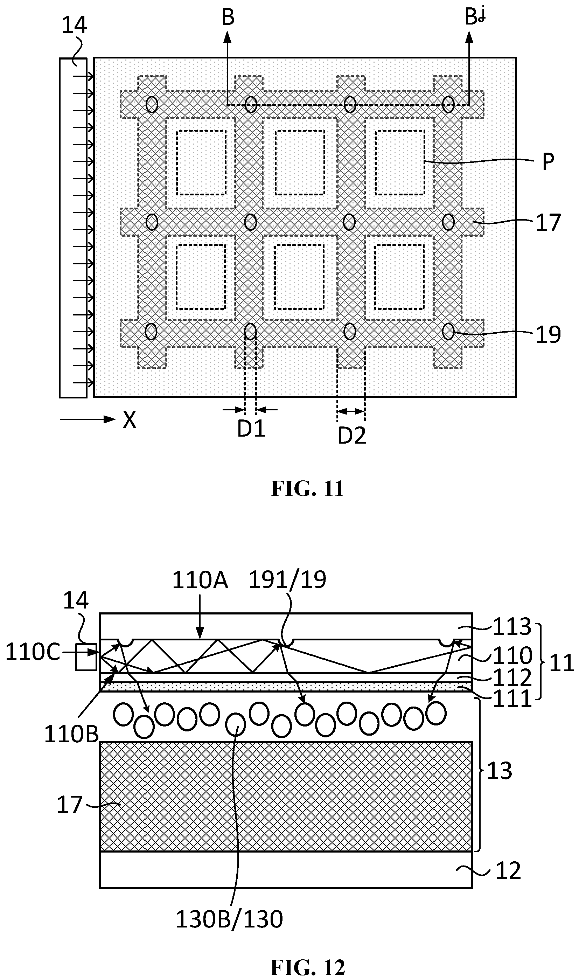

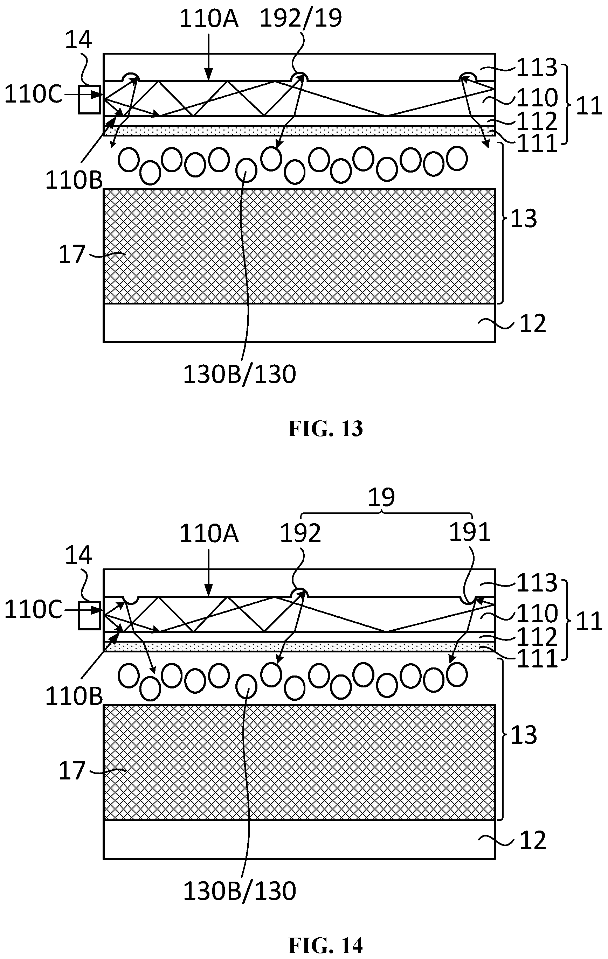

FIG. 11 is another structure view of a display module according to an embodiment of the present disclosure, FIG. 12 is a sectional view taken along B-B' in FIG. 11, FIG. 13 is another partial sectional view of a display module according to an embodiment of the present disclosure, and FIG. 14 is another partial sectional view of a display module according to an embodiment of the present disclosure. As shown in FIGS. 11 to 14, optionally, multiple dot structures 19 are disposed on the first surface 110A of the functional layer 110. The multiple dot structures 19 includes a groove structure 191 and/or a protrusion structure 192.

Specifically, as shown in FIGS. 11 to 14, in the direction perpendicular to the plane on which the display module is located, the first low refractive index layer 112 and the second low refractive index layer 113 are disposed on opposite sides of the functional layer 110, respectively. The refractive index n1 of the first low refractive index layer 112 and the refractive index n2 of the second low refractive index layer 113 are both less than the refractive index n0 of the functional layer 110. After the light beam emitted by the light source 14 enters the functional layer 110, part of the light beam undergoes total reflection on the first surface 110A and the second surface 110B multiple times to be propagated in the functional layer 110. In this manner, the light beam entering the functional layer 110 is evenly distributed in the interior of the functional layer 110, thereby solving the problem of uneven brightness.

Further, as shown in FIGS. 11 to 14, multiple dot structures 19 are disposed on the first surface 110A of the functional layer 110. The dot structures 19 are used for changing the planar structure of the first surface 110A, to make the light beam that originally satisfies the total reflection condition no longer satisfy the total reflection condition. Specifically, when the light beam which is originally propagated through total reflection in the functional layer 110 is transmitted to the dot structure 19 on the first surface 110A, the light beam is scattered or reflected by the dot structure 19 toward the second surface 110B, and moreover, the incident angle of the light beam on the second surface 110B is changed. In this manner, the light beam no longer satisfies the total reflection condition but passes through the second surface 110B and is guided to the electrophoretic layer 13. Therefore, the light emission efficiency of the functional layer 110 toward the electrophoretic layer 13 is improved, thereby improving the light utilization rate and improving the definition and the contrast of the display content.

Optionally, as shown in FIG. 12, each of the dot structures 19 may be a groove structure 191 on the first surface 110A of the functional layer 110. The groove structure 191 may be formed on the first surface 110A of the functional layer 110 by laser dotting to improve the production efficiency, but is not limited thereto.

Further, the thermal expansion coefficient of the functional layer 110 is C, where 3.2*10⁻⁶/K ≤ C ≤ 3.4*10⁻⁶/K, to ensure that the dimensional change of the functional layer 110 when the temperature changes is within a controllable range. In this manner, when laser dotting is performed on the first surface 110A of the functional layer 110, the dimensional change caused by temperature changes may be reduced, thereby improving the accuracy of laser dotting and ensuring the location accuracy and the shape quality of the groove structure 191.

Optionally, the material of the functional layer 110 may be glass. Glass has great thermal stability, may maintain the physical and chemical properties unchanged in a wide temperature range, and thus makes laser processing easy to perform, thereby achieving the complex design of the groove structure 191.

Optionally, when the material of the functional layer 110 is glass, the refractive index n0 of the functional layer 110 may satisfy the condition that 1.47 ≤ n0 ≤ 1.52. In this manner, a relatively large refractive index difference between the functional layer 110 and the first low refractive index layer 112 adjacent thereto and/or a relatively large refractive index difference between the functional layer 110 and the second low refractive index layer 113 adjacent thereto are provided to achieve total reflection easily, and the selection of the material of the functional layer 110 may be more extensive and more practical.

Optionally, as shown in FIG. 13, each of the dot structures 19 may be a protrusion structure 192 on the first surface 110A of the functional layer 110. The protrusion structure 192 may be formed on the first surface 110A of the functional layer 110 by printing or inkjet printing to precisely control the location, the shape, and the dimension of the protrusion structure 192. The material of the protrusion structure 192 may be a transparent ink to reduce the impact on transmittance, but is not limited thereto.

Optionally, as shown in FIG. 14, the multiple dot structures 19 may include both a groove structure 191 and a protrusion structure 192 on the first surface 110A of the functional layer 110. Through the above setting, a variety of processes may be used for preparing such a high-density dot structure 19, thereby breaking through the density limitations imposed by a single preparation process.

Optionally, the shape of the vertical projection of the dot structure 19 on the first substrate 11 is circular or elliptical, so that the light beam may be scattered or reflected by the dot structure 19 more evenly, thereby improving brightness uniformity. Moreover, the preparation process may become relatively simple and easy to implement.

Optionally, a sidewall of the groove structure 191 and/or the protrusion structure 192 in the dot structures 19 is an inclined surface. Such inclined surface has an included angle with the direction perpendicular to the plane on which the first substrate 11 is located, and the angle is not equal to 90°. Through the above setting, the dot structures 19 may scatter or reflect the light beam toward the electrophoretic layer 13, and the light emission efficiency of the functional layer 110 toward the electrophoretic layer 13 may be improved, thereby improving the definition and the contrast of the display content.

In other embodiments, the sidewall of the groove structure 191 and/or the protrusion structure 192 in the dot structure 19 may be an arc surface. In this manner, the scattering effect of the dot structure 19 on the light beam may be enhanced, and the light beam may be illuminated on the electrophoretic layer 13 more evenly, thereby improving the display brightness uniformity of the display module.

For example, as shown in FIGS. 12 to 14, the dot structure 19 may be hemispherical. In the direction perpendicular to the plane on which the first substrate 11 is located, the cross-section of the dot structure 19 is semicircular, and thus the preparation process may become relatively easy to implement.

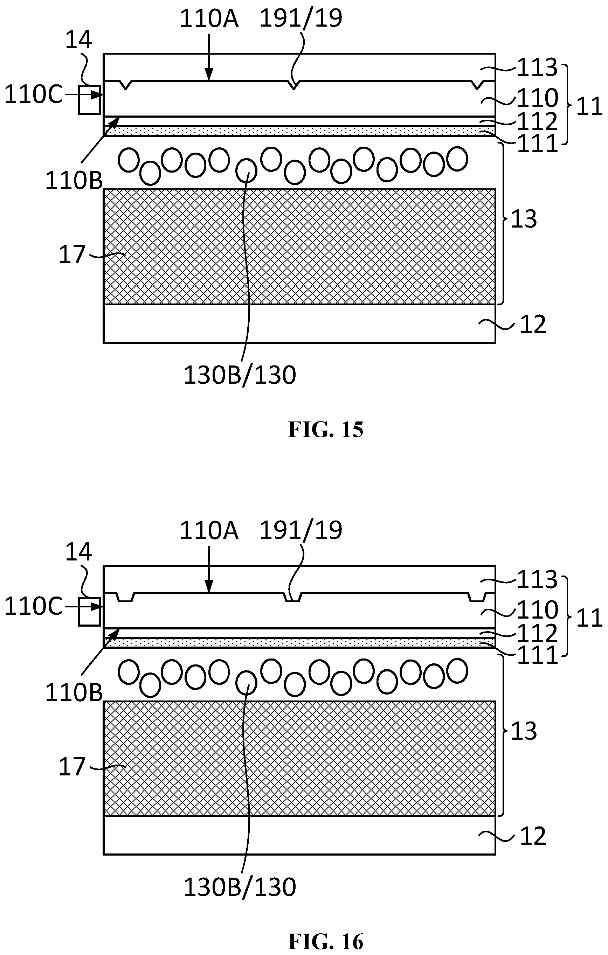

FIG. 15 is another partial sectional view of a display module according to an embodiment of the present disclosure. As shown in FIG. 15, optionally, the dot structure 19 may be conical. In the direction perpendicular to the plane on which the first substrate 11 is located, the cross-section of the dot structure 19 is triangular, and the preparation process is relatively easy to implement.

FIG. 16 is another partial sectional view of a display module according to an embodiment of the present disclosure. As shown in FIG. 16, optionally, the dot structure 19 may be frustum cone-shaped. In the direction perpendicular to the plane on which the first substrate 11 is located, the cross-section of the dot structure 19 is trapezoidal.

In other embodiments, the dot structure 19 may have an irregular shape, which is not specifically limited in the embodiments of the present disclosure.

Optionally, the depth of the groove structure 191 is greater than or equal to 5 µm to increase the contact opportunities of the light beam with the surface of the groove structure 191. In this manner, more light beams may be scattered or reflected toward the electrophoretic layer 13, and the light emission efficiency of the functional layer 110 toward the electrophoretic layer 13 may be improved, thereby improving the definition and the contrast of the display content. Further, the depth of the groove structure 191 may be less than or equal to 7 µm to prevent the groove structure 191 from affecting the propagation of the light beam in the interior of the functional layer 110.

Optionally, the height of the protrusion structure 192 is greater than or equal to 5 µm to increase the contact opportunities of the light beam with the surface of the protrusion structure 192. In this manner, more light beams may be scattered or reflected toward the electrophoretic layer 13, and the light emission efficiency of the functional layer 110 toward the electrophoretic layer 13 may be improved, thereby improving the definition and the contrast of the display content. Further, the height of the protrusion structure 192 may be less than or equal to 7 µm to avoid affecting the overall thickness of the display module.

With continued reference to FIGS. 11 to 16, optionally, a cofferdam structure 17 is disposed between the first substrate 11 and the second substrate 12. In the direction perpendicular to the plane on which the first substrate 11 is located, the cofferdam structure 17 at least partially overlaps the dot structures 19.

Specifically, as shown in FIGS. 11 to 16, the cofferdam structure 17 is disposed between the first substrate 11 and the second substrate 12. The cofferdam structure 17 may be a grid structure to form multiple grid holes. The grid holes formed by the cofferdam structure 17 are filled with electrophoretic particles 130 and an electrophoretic fluid and then encapsulated. The cofferdam structure 17, the electrophoretic particles 130, and the electrophoretic fluid constitute the electrophoretic layer 13.

The cofferdam structure 17 may support the display module. Therefore, the degree of deformation of the first substrate 11 or the second substrate 12 when pressed is reduced, and the impact of deformation on the flow of the electrophoretic fluid and the movement of the electrophoretic particles 130 is reduced, thereby avoiding fluctuation and discoloration of the display image and improving the display precision and the display reliability of the display module.

Optionally, as shown in FIGS. 11 to 16, the cofferdam structure 17 is disposed on the second substrate 12. At this point, a gap may exist between the cofferdam structure 17 and the first substrate 11 to allow the electrophoretic particles 130 to move between the cofferdam structure 17 and the first substrate 11, thereby reducing the risk of excessive concentration of the electrophoretic particles 31 in a single region and improving the display reliability.

In some embodiments, the cofferdam structure 17 may be in contact with the first surface 11 to improve the supporting effect of the cofferdam structure 17 on the display module. Therefore, the degree of deformation of the display module when pressed is further reduced, and the impact of deformation on the flow of the electrophoretic fluid and the movement of the electrophoretic particles 130 is reduced, thereby avoiding fluctuation and discoloration of the display image and improving the display precision and the display reliability of the display module.

In other embodiments, the cofferdam structure 17 may be disposed on the first substrate 11. In this manner, a gap may exist between the cofferdam structure 17 and the second substrate 12 to allow the electrophoretic particles 130 to move between the cofferdam structure 17 and the second substrate 12, thereby reducing the risk of excessive concentration of the electrophoretic particles 31 in a single region and improving the display reliability.

In yet other embodiments, the cofferdam structure 17 may be in contact with the second surface 12 to improve the supporting effect of the cofferdam structure 17 on the display module. Therefore, the degree of deformation of the display module when pressed is further reduced, and the impact of deformation on the flow of the electrophoretic fluid and the movement of the electrophoretic particles 130 is reduced, thereby avoiding fluctuation and discoloration of the display image and improving the display precision and the display reliability of the display module.

Further, as shown in FIG. 11, the display module may include multiple pixels P arranged in an array. The pixel P is the smallest unit constituting the display image. One pixel P may be provided with one corresponding pixel electrode to achieve independent control of each pixel P. During the displaying of an image, certain electric fields are formed between the pixel electrodes and the common electrode layer 111. Since the electrophoretic particles 130 each carry a certain charge, the electrophoretic particles 130 move relatively close to or away from the pixel electrodes under the action of the electric field, and the light beams illuminated on the electrophoretic layer 13 are reflected or transmitted by the pixels P and then emitted to the human eyes so that the user can view the image displayed by the display module.

In the embodiments, as shown in FIG. 11, the cofferdam structure 17 may be disposed around the pixel P so that the cofferdam structure 17 can better support and protect the pixel P.

One grid hole of the cofferdam structure 17 may be used for accommodating one pixel P or multiple pixels P, which is not specifically limited in the embodiments of the present disclosure.

With continued reference to FIGS. 11 to 16, in the embodiments, by setting the cofferdam structure 17 to at least partially overlap the dot structures 19 in the direction perpendicular to the plane on which the first substrate 11 is located, the overlapping area between the dot structures 19 and the pixels P may be reduced, and the interference of the dot structures 19 with the light beams emitted by the pixels P may be reduced, thereby improving the display effect.

Further, as shown in FIGS. 11 to 16, in the direction perpendicular to the plane on which the first substrate 11 is located, the cofferdam structure 17 may cover the dot structure 19 to further reduce the overlapping area between the dot structure 19 and the pixel P and reduce the interference of the dot structure 19 with the light beam emitted by the pixel P, thereby improving the display effect.

With continued reference to FIG. 11, optionally, a cofferdam structure 17 is disposed between the first substrate 11 and the second substrate 12. In a first direction X, the length of the dot structure 19 is D1, and the cofferdam structure 17 has a length D2, where D1 < D2, and the first direction X is parallel to the plane on which the first substrate 11 is located.

As shown in FIG. 11, the length D2 of the cofferdam structure 17 may be the minimum length of the cofferdam structure 17 in the first direction X.

In the embodiments, as shown in FIG. 11, by setting the length D1 of the dot structure 19 to be less than or equal to the length D2 of the cofferdam structure 17 in any direction (for example, the first direction X shown in the figure) parallel to the plane on which the first substrate 11 is located, the cofferdam structure 17 is enabled to cover the dot structure 19 in the direction perpendicular to the plane on which the first substrate 11 is located. In this manner, the overlapping area between the dot structure 19 and the pixel P may be reduced, and the interference of the dot structure 19 with the light beam emitted by the pixel P may be reduced, thereby improving the display effect.

Optionally, as shown in FIG. 11, the length D2 of the cofferdam structure 17 in the first direction X may be set to 20 µm to 30 µm. For example, the length D2 of the cofferdam structure 17 in the first direction X is 24 µm. In this manner, the cofferdam structure 17 may not occupy an excessive area and thus affect the display effect, while providing a great supporting effect.

Optionally, as shown in FIG. 11, the length D1 of the dot structure 19 in the first direction X is greater than or equal to 10 µm. In this manner, the contact opportunities of the light beam with the surface of the dot structure 19 may be increased, more light beams may be scattered or reflected toward the electrophoretic layer 13, and the light emission efficiency of the functional layer 110 toward the electrophoretic layer 13 may be improved, thereby improving the definition and the contrast of the display content.

Moreover, the length D1 of the dot structure 19 in the first direction X is less than or equal to 20 µm. In this manner, the cofferdam structure 17 may be enabled to cover the dot structure 19 in the direction perpendicular to the plane on which the first substrate 11 is located, the overlapping area between the dot structure 19 and the pixel P may be reduced, and the interference of the dot structure 19 with the light beam emitted by the pixel P may be reduced, thereby improving the display effect.

For example, the length D1 of the dot structure 19 in the first direction X is 18 µm to reduce the interference of the dot structure 19 with the light beam emitted by the pixel P while improving light emission efficiency of the functional layer 110 toward the electrophoretic layer 13, thereby improving the display effect, but is not limited thereto.

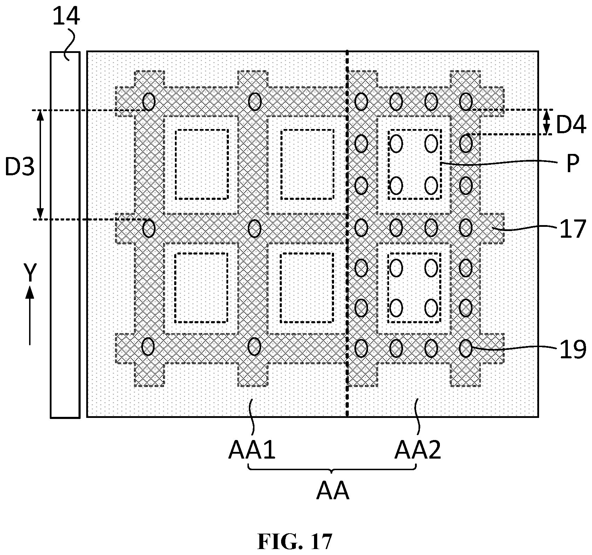

FIG. 17 is another structure view of a display module according to an embodiment of the present disclosure. As shown in FIG. 17, optionally, a display region AA of the display module provided by the embodiments of the present disclosure includes a first display region AA1 and a second display region AA2. The first display region AA1 is located on a side of the second display region AA2 facing the light source 14. The density of the dot structures 19 in the first display region AA1 is less than the density of the dot structures 19 in the second display region AA2.

Specifically, as shown in FIG. 17, the display region AA is divided into a first display region AA1 and a second display region AA2. The first display region AA1 is located between the second display region AA2 and the light source 14. In this manner, the distance between the first display region AA1 and the light source 14 is relatively short, and the distance between the second display region AA2 and the light source 14 is relatively long. After the light beam emitted by the light source 14 enters the interior of the functional layer 110, the light beam passes through the first display region AA1 and then is transmitted to the second display region AA2. As the propagation distance of the light beam in the interior of the functional layer 110 increases, the light intensity continues to attenuate. Therefore, the light intensity in the first display region AA1 close to the light source 14 is relatively strong, thereby causing a relatively high display brightness; the light intensity in the second display region AA2 away from the light source 14 is relatively weak, thereby causing a relatively low display brightness; and thus, the display brightness of the display module becomes uneven.

In the embodiments, the density of the dot structures 19 in the first display region AA1 is set to be relatively small. That is, the number of dot structures 19 within the unit area of the first display region AA1 is relatively small. In this manner, the number of light beams guided to the electrophoretic layer 13 by the dot structures 19 in the first display region AA1 may be decreased, thereby reducing the light emission efficiency of the functional layer 110 toward the electrophoretic layer 13 in the first display region AA1.

Moreover, the density of the dot structures 19 in the second display region AA2 is set to be relatively large. That is, the number of dot structures 19 within the unit area of the second display region AA2 is relatively large. In this manner, the number of light beams guided to the electrophoretic layer 13 by the dot structures 19 in the second display region AA2 may be increased, thereby improving the light emission efficiency of the functional layer 110 toward the electrophoretic layer 13 in the second display region AA2.

Through the above setting, the display brightness of the first display region AA1 close to the light source 14 is reduced, and the display brightness of the second display region AA2 away from the light source 14 is improved. Therefore, the display brightness difference between the first display region AA1 and the second display region AA2 is reduced, thereby solving the problem of uneven brightness, and improving the display brightness uniformity.

With continued reference to FIG. 17, optionally, a display region AA of the display module provided by the embodiments of the present disclosure includes a first display region AA1 and a second display region AA2. The first display region AA1 is located on a side of the second display region AA2 facing the light source 14. In the first display region AA1, the spacing between adjacent two dot structures 19 in a second direction Y is D3. In the second display region AA2, the spacing between adjacent two dot structures 19 in the second direction is D4; where D3 > D4. The second direction is parallel to the plane on which the first substrate 11 is located.

As described above, since the distance between the first display region AA1 and the light source 14 is relatively short while the distance between the second display region AA2 and the light source 14 is relatively long. Thus, the display brightness in the first display region AA1 close to the light source 14 is relatively high, and the display brightness in the second display region AA2 away from the light source 14 is relatively low, thereby resulting in uneven display brightness of the display module.

In the embodiments, as shown in FIG. 17, in the first display region AA1, by setting the spacing D3 between adjacent two dot structures 19 in any direction (for example, the second direction Y shown in the figure) parallel to the plane on which the first substrate 11 is located to be relatively large, the dot structures 19 in the first display region AA1 are relatively sparse. That is, the number of dot structures 19 within the unit area of the first display region AA1 is relatively small. In this manner, the number of light beams guided to the electrophoretic layer 13 by the dot structures 19 in the first display region AA1 may be decreased, thereby reducing the light emission efficiency of the functional layer 110 toward the electrophoretic layer 13 in the first display region AA1.

Moreover, in the second display region AA2, by setting the spacing D4 between adjacent two dot structures 19 in any direction (for example, the second direction Y shown in the figure) parallel to the plane on which the first substrate 11 is located to be relatively small, the dot structures 19 in the second display region AA2 are relatively dense. That is, the number of dot structures 19 within the unit area of the second display region AA2 is relatively large. In this manner, the number of light beams guided to the electrophoretic layer 13 by the dot structures 19 in the second display region AA2 may be increased, thereby improving the light emission efficiency of the functional layer 110 toward the electrophoretic layer 13 in the second display region AA2.

Through the above setting, the display brightness of the first display region AA1 close to the light source 14 is reduced, and the display brightness of the second display region AA2 away from the light source 14 is improved. Therefore, the display brightness difference between the first display region AA1 and the second display region AA2 is reduced, thereby solving the problem of uneven brightness, and improving the display brightness uniformity.

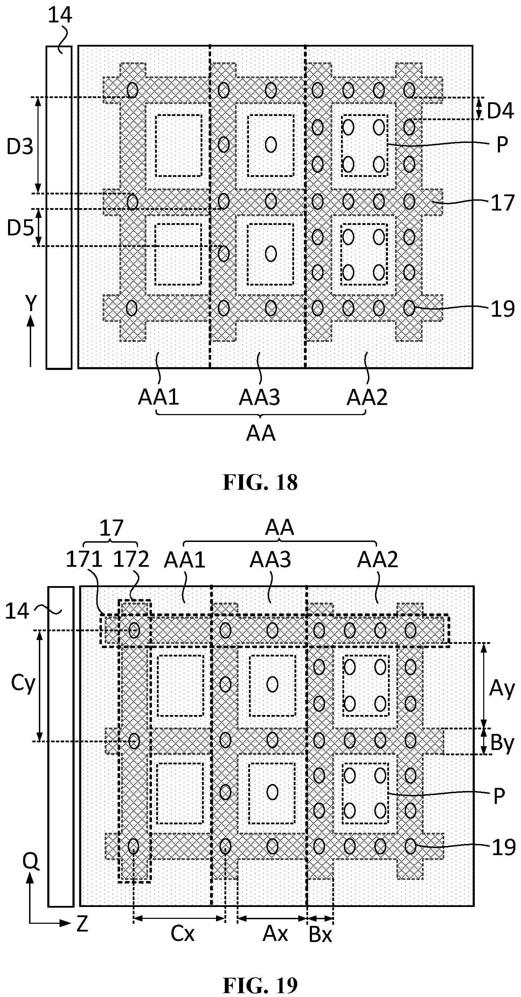

FIG. 18 is another structure view of a display module according to an embodiment of the present disclosure. As shown in FIG. 18, optionally, the display region AA of the display module provided by the embodiments of the present disclosure further includes a third display region AA3. The third display region AA3 is located between the first display region AA1 and the second display region AA2. The density of the dot structures 19 in the third display region AA3 is less than the density of the dot structures 19 in the second display region AA2, and the density of the dot structures 19 in the third display region AA3 is greater than the density of the dot structures 19 in the first display region AA1.

Specifically, as shown in FIG. 18, the third display region AA3 is disposed between the first display region AA1 and the second display region AA2. Thus, the distances from the first display region AA1, the third display region AA3, and the second display region AA2 to the light source 14 gradually increase. After the light beam emitted by the light source 14 enters the functional layer 110, the light beam passes through the first display region AA1 and the third display region AA3 sequentially and then is transmitted to the second display region AA2. As the propagation distance of the light beam in the interior of the functional layer 110 increases, the light intensity continues to attenuate. Therefore, the display brightnesses of the first display region AA1, the third display region AA3, and the second display region AA2 gradually decrease, thereby causing the problem of uneven display brightness of the display module.

In the embodiments, the third display region AA3 serves as a transition region between the first display region AA1 and the second display region AA2. By setting the densities of the dot structures 19 in the first display region AA1, the third display region AA3, and the second display region AA2 to sequentially increase, the light emission efficiencies of the functional layer 110 toward the electrophoretic layer 13 in the first display region AA1, the third display region AA3, and the second display region AA2 sequentially increase. In this manner, the density of the dot structures 19 may gradually increase as the propagation distance of the light beam in the interior of the functional layer 110 increases, thereby enabling the light beam to be illuminated on the electrophoretic layer 13 more evenly and improving the uniformity of the display brightness of the display module.

With continued reference to FIG. 18, optionally, in the first display region AA1, the spacing between adjacent two dot structures 19 in the second direction Y is D3; in the second display region AA2, the spacing between adjacent two dot structures 19 in the second direction is D4; in the third display region AA3, the spacing between adjacent two dot structures 19 in the second direction is D5; where D3 > D5 > D4. The second direction is parallel to the plane on which the first substrate 11 is located.

As shown in FIG. 18, the third display region AA3 serves as a transition region between the first display region AA1 and the second display region AA2. By setting the spacing D3 between adjacent two dot structures 19 in the first display region AA1, the spacing D5 between adjacent two dot structures 19 in the third display region AA3, and the spacing D4 between adjacent two dot structures 19 in the second display region AA2 in any direction (for example, the second direction Y shown in the figure) parallel to the plane on which the first substrate 11 is located to sequentially decrease, the densities of the dot structures 19 in the first display region AA1, the third display region AA3, and the second display region AA2 sequentially increase. In this manner, the density of the dot structures 19 may gradually increase as the propagation distance of the light beam in the interior of the functional layer 110 increases, and the light emission efficiency of the functional layer 110 toward the electrophoretic layer 13 may gradually increase as the propagation distance of the light beam in the interior of the functional layer 110 increases, thereby enabling the light beam to be illuminated on the electrophoretic layer 13 more evenly and improving the uniformity of the display brightness of the display module.

FIG. 19 is another structure view of a display module according to an embodiment of the present disclosure. As shown in FIG. 19, optionally, the multiple dot structures 19 are arranged in an array, and the cofferdam structure 17 includes multiple first block walls 171 and multiple second walls 172. The multiple first block walls 171 extend in a third direction Z and are arranged in a fourth direction Q. The multiple second block walls 172 extend in the fourth direction Q and are arranged in the third direction Z. The third direction Z intersects the fourth direction Q. In the third direction Z, the distance between adjacent dot structures 19 is Cx, the spacing between adjacent second block walls 172 is Ax, and the width of the second block wall 172 is Bx. In the fourth direction Q, the distance between adjacent dot structures 19 is Cy, the spacing between adjacent first block walls 171 is Ay, and the width of the first block wall 171 is By. Cx ≤ (Ax + Bx)/N, Cy ≤ (Ay + By)/N, and N is a positive integer greater than 0.

Specifically, the multiple dot structures 19 are arranged in an array, and the dot structures 19 may be evenly distributed on the functional layer 110, thereby improving the display uniformity of the display module.

The cofferdam structure 17 includes multiple first block walls 171 and multiple second walls 172. The multiple first block walls 171 and the multiple second walls 172 are disposed crosswise to form a grid structure.

In the extension direction (for example, the third direction Z shown in the figure) of the first block wall 171, the distance Cx between adjacent dot structures 19 is at least less than or equal to the sum of the spacing Ax between adjacent second block walls 172 and the width Bx of the second block wall 172. In this manner, the dot structures 19 may be in a sufficiently large distribution density in the extension direction (for example, the third direction Z shown in the figure) of the first block wall 171 to ensure the light emission efficiency of the functional layer 110 toward the electrophoretic layer 13, thereby improving the definition and the contrast of the display content.

Similarly, in the extension direction (for example, the fourth direction Q shown in the figure) of the second block wall 172, the distance Cy between adjacent dot structures 19 is at least less than or equal to the sum of the spacing Ay between adjacent first block walls 171 and the width By of the first block wall 171. In this manner, the dot structures 19 may be in a sufficiently large distribution density in the extension direction (for example, the fourth direction Q shown in the figure) of the second block wall 172 to ensure the light emission efficiency of the functional layer 110 toward the electrophoretic layer 13, thereby improving the definition and the contrast of the display content.

Further, as shown in FIG. 19, Cx = (Ax + Bx)/N, and Cy = (Ay + By)/N.

Through the above setting, in the extension direction (for example, the third direction Z shown in the figure) of the first block wall 171, the sum of the spacing Ax between adjacent second block walls 172 and the width Bx of the second block wall 172 is in an integer multiple relationship with the distance Cx between adjacent dot structures 19.

For example, in the first display region AA1, the sum of the spacing Ax between adjacent second block walls 172 and the width Bx of the second block wall 172 is equal to the distance Cx between adjacent dot structures 19, that is, N = 1, and then Cx = (Ax + Bx)/N = Ax + Bx. In the third display region AA3, the sum of the spacing Ax between adjacent second block walls 172 and the width Bx of the second block wall 172 is in a two-fold relationship with the distance Cx between adjacent dot structures 19, that is, N = 2, and then Cx = (Ax + Bx)/N = (Ax + Bx)/2. In the second display region AA2, the sum of the spacing Ax between adjacent second block walls 172 and the width Bx of the second block wall 172 is in a four-fold relationship with the distance Cx between adjacent dot structures 19, that is, N = 4, and then Cx = (Ax + Bx)/N = (Ax + Bx)/4.

In this manner, in the direction perpendicular to the plane on which the first substrate 11 is located, the dot structures 19 are more likely to overlap the second block walls 172, and the interference of the dot structures 19 with the light beams emitted by the pixels P may be reduced, thereby improving the display effect.

Similarly, in the extension direction (for example, the fourth direction Q shown in the figure) of the second block wall 172, the sum of the spacing Ay between adjacent first block walls 171 and the width By of the first block wall 171 is in an integer multiple relationship with the distance Cy between adjacent dot structures 19.

For example, in the first display region AA1, the sum of the spacing Ay between adjacent first block walls 171 and the width By of the first block wall 171 is equal to the distance Cy between adjacent dot structures 19, that is, N = 1, and then Cy = (Ay + By)/N = Ay + By. In the third display region AA3, the sum of the spacing Ay between adjacent first block walls 171 and the width By of the first block wall 171 is in a two-fold relationship with the distance Cy between adjacent dot structures 19, that is, N = 2, and then Cy = (Ay + By)/N = (Ay + By)/2. In the second display region AA2, the sum of the spacing Ay between adjacent first block walls 171 and the width By of the first block wall 171 is in a four-fold relationship with the distance Cy between adjacent dot structures 19, that is, N = 4, and then Cy = (Ay + By)/N = (Ay + By)/4.

In this manner, in the direction perpendicular to the plane on which the first substrate 11 is located, the dot structures 19 are more likely to overlap the first block walls 171, and the interference of the dot structures 19 with the light beams emitted by the pixels P may be reduced, thereby improving the display effect.

Optionally, the distance Ax between adjacent second block walls 172 in the third direction Z may be 20 µm to 30 µm. The distance Ay between adjacent first block walls 171 in the fourth direction Q may be 20 µm to 30 µm. In this manner, the cofferdam structure 17 may not occupy an excessive area and thus affect the display effect, while providing a great supporting effect. However, values of the distance Ax and the distance Ay are not limited thereto.

It is to be noted that the third direction Z is perpendicular to the fourth direction Q in FIG. 19 for the purpose of illustration, but is not limited thereto.

With continued reference to FIGS. 1 to 16, optionally, the first substrate 11 is located on a light emission side of the display module.

Specifically, as shown in FIGS. 1 to 16, the first substrate 11 is located on the light emission side of the display module, that is, the first substrate 11 is located on a side where the user views the display content, thereby forming a reflective display module.

In this manner, external ambient light (such as natural light or indoor light) is illuminated on the electrophoretic layer 13 and is reflected to the human eyes by the electrophoretic layer. The electrophoretic particles 130 in the electrophoretic layer 13 move under the action of the electric field, and the arrangement state of the electrophoretic layer 13 changes accordingly. Therefore, light of different colors may be selectively reflected, and the light reflected by the electrophoretic layer 13 enters the eyes of the user so that the user may view the image. The image displayed by the display module may still be clearly visible under direct sunlight, and the display module has a wide viewing angle and can provide very high contrast and definition.

Moreover, the light beam emitted by the light source 14 may be evenly illuminated on the electrophoretic layer 13 under the guide of the functional layer 110 of the first substrate 11, and then the light beam is reflected to the human eyes by the electrophoretic layer 13. Thus, the human eyes can view the content displayed by the display module in a low-light environment, thereby enhancing the readability of the display module in the low-light environment.

Optionally, as shown in FIGS. 4 to 6, the common electrode layer 111 may be disposed on the first substrate 11, and the pixel electrode 121 may be disposed on the second substrate 12. By applying a voltage signal to the pixel electrode 121, an electric field may be formed between the pixel electrode 121 and the common electrode layer 111. The electric field exerts an attractive or repulsive force on the electrophoretic particles 130 to move the electrophoretic particles 130 under the action of the electric field. However, the locations of the common electrode layer 111 and the pixel electrode 121 are not limited thereto.

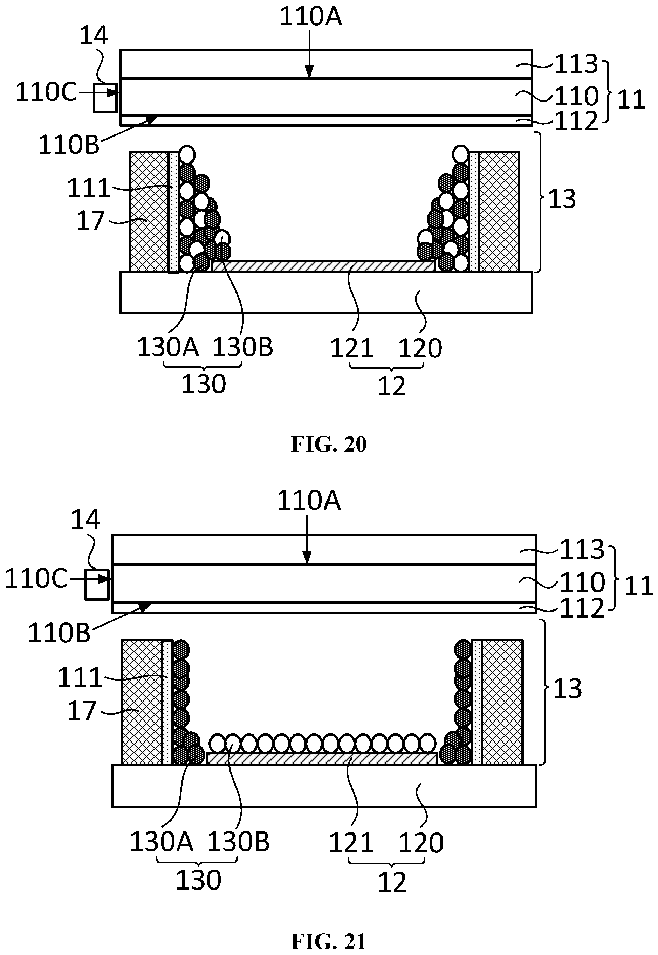

FIG. 20 is another partial sectional view of a display module according to an embodiment of the present disclosure, and FIG. 21 is another partial sectional view of a display module according to an embodiment of the present disclosure. As shown in FIGS. 20 and 21, optionally, the pixel electrode 121 may be formed on the base 120 of the second substrate 12 and may be a white electrode. The common electrode layer 111 may be formed on the sidewalls of the cofferdam structure 17. The following is described by using an example where first-colored electrophoretic particles 130A are positively charged black electrophoretic particles and second-colored electrophoretic particles 130B are negatively charged black electrophoretic particles. As shown in FIG. 20, by applying an alternating current (AC) voltage with a relatively large amplitude to the pixel electrode 121, both the positively charged first-colored electrophoretic particles 130A and the negatively charged second-colored electrophoretic particles 130B move to a strong electric field region (near the common electrode layer 111). In this case, the pixel electrode 121 is exposed. Since the pixel electrode 121 may be a white electrode, a white display may be achieved. As shown in FIG. 21, by applying an AC voltage with a relatively small amplitude to the pixel electrode 121, the negatively charged second-colored electrophoretic particles 130B move onto the pixel electrode 121. In this case, the pixel electrode 121 is covered with the second-colored electrophoretic particles 130B which are black, and then a black display is achieved.

It is to be noted that the locations and the working processes of the pixel electrode 121 and the common electrode layer 111 are not limited to the above embodiments, which is not specifically limited in the embodiments of the present disclosure.

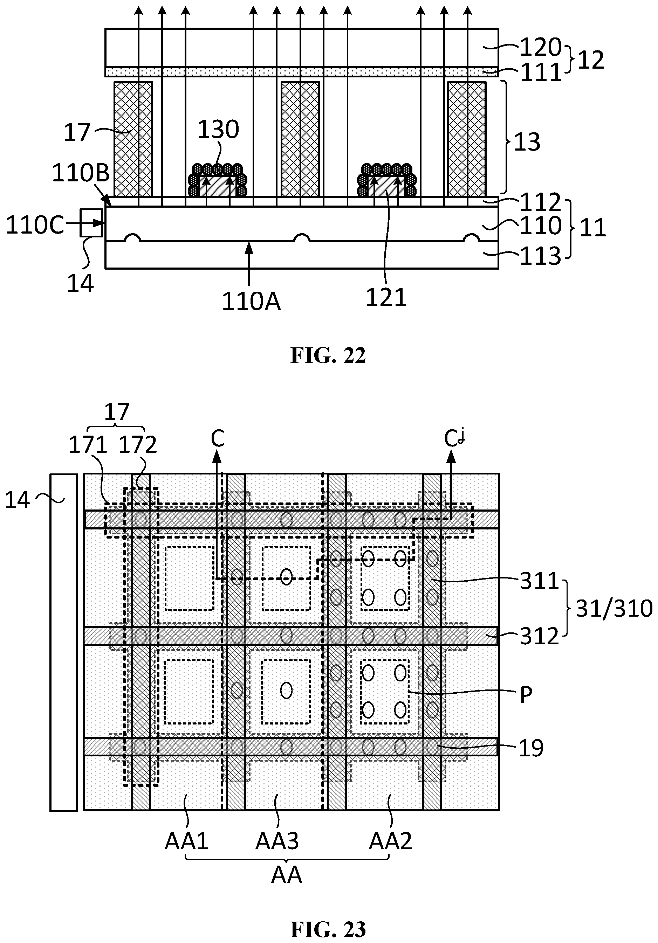

FIG. 22 is another partial sectional view of a display module according to an embodiment of the present disclosure. As shown in FIG. 22, optionally, the first substrate 11 is located on a backlight side of the display module.

Specifically, as shown in FIG. 22, the first substrate 11 is located on the backlight side of the display module, that is, the first substrate 11 is located on the side of the electrophoretic layer 13 away from the user, and then the second substrate 12 is located on the side where the user views the display content. The light beam emitted by the light source 14 is evenly illuminated on the electrophoretic layer 13 under the guide of the functional layer 110 of the first substrate 11, and the light beam is transmitted to the human eyes through the electrophoretic layer 13 so that the human eyes can view the content displayed by the display module.

As shown in FIG. 22, in the embodiments, the common electrode layer 111 may be disposed on the base 120 of the second substrate 12, and the pixel electrode 121 may be disposed on the first substrate 11. By applying a voltage signal to the pixel electrode 121, an electric field may be formed between the pixel electrode 121 and the common electrode layer 111. The electric field exerts an attractive or repulsive force on the electrophoretic particles 130 to move the electrophoretic particles 130 under the action of the electric field. However, the locations of the common electrode layer 111 and the pixel electrode 121 are not limited thereto.

Specifically, as shown in FIG. 22, the following is described by using an example where the dimension of the pixel electrode 121 is smaller than the dimension of the pixel size and the electrophoretic particles 130 are black electrophoretic particles. By applying a specific voltage signal to the pixel electrode 121, the electrophoretic particles 130 may be concentrated near the pixel electrode 121. In this case, most of the light beams guided to the electrophoretic layer 13 by the functional layer 110 may pass through the electrophoretic layer 13 and then be transmitted to the human eyes. Thus, a white display may be achieved. When the application of the specific voltage signal to the pixel electrode 121 stops, the electric field disappears. In this case, the electrophoretic particles 130 are evenly dispersed in the electrophoretic fluid, the light beam guided to the electrophoretic layer 13 by the functional layer 110 is absorbed or blocked by the electrophoretic particles 130 and cannot be transmitted to the human eyes. Thus, a black display may be achieved.

It is to be noted that the locations and the working processes of the pixel electrode 121 and the common electrode layer 111 are not limited to the above embodiments, which is not specifically limited in the embodiments of the present disclosure.

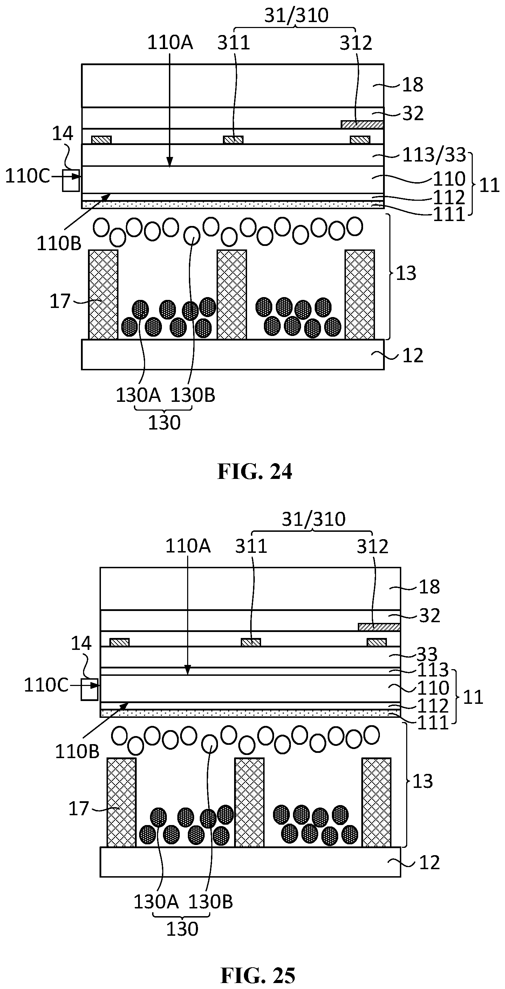

FIG. 23 is another structure view of a display module according to an embodiment of the present disclosure, and FIG. 24 is a sectional view taken along C-C' in FIG. 23. As shown in FIGS. 23 and 24, optionally, the display module provided by the embodiments of the present disclosure further includes a touch structure 31. The touch structure 31 is located on a side of the first substrate 11 facing away from the electrophoretic layer 13.

The touch structure 31 is used for achieving a touch function.

Specifically, as shown in FIGS. 23 and 24, by disposing the touch structure 31 on the side of the first substrate 11 facing away from the electrophoretic layer 13, the distance between the touch structure 31 and the user's touch location becomes relatively short, thereby providing a fast response speed and a high touch precision.

Optionally, as shown in FIGS. 23 and 24, the touch structure 31 may adopt a mutual capacitive touch structure. The touch structure 31 includes multiple first touch electrodes 311 and multiple second touch electrodes 312. The multiple first touch electrodes 311 and the multiple second touch electrodes 312 are disposed crosswise, and the first touch electrodes 311 and the second touch electrodes 312 are insulated from each other. The display module may generate touch information based on the capacitance change between the first touch electrodes 311 and the second touch electrodes 312, thereby achieving the touch function.

Optionally, the first touch electrode 311 is a touch driving electrode and the second touch electrode 312 is a touch sensing electrode. Alternatively, the first touch electrode 311 is a touch sensing electrode and the second touch electrode 312 is a touch driving electrode.

The touch driving electrode and the touch sensing electrode may both be electrically connected to a touch chip. During the touch stage of the display panel, the touch chip sends a touch driving signal to the touch driving electrode. When the touch sensing electrode senses the touch from a finger or other touch subjects, the touch sensing electrode sends a touch sensing signal to the touch chip. The touch chip processes the touch sensing signal to obtain the touch location, thereby achieving the touch function of the display panel.

In another embodiment, the touch structure 31 may adopt a self-capacitive touch structure. The touch structure 31 may include multiple touch electrode blocks, and the touch electrode blocks are insulated from each other. Each touch electrode block may form a self-capacitance with the ground. The self-capacitance formed between the touch electrode block and the ground may be changed by an external capacitance formed by the touch from a finger or other touch subjects. Thus, the specific location of the touch point may be detected. The multiple touch electrode blocks may be disposed in the same layer, thereby reducing the number of film layers and reducing the thickness of the display panel.

In other embodiments, the touch structure 31 may adopt other types of touch structures, which is not specifically limited in the embodiments of the present disclosure.

FIG. 25 is another partial sectional view of a display module according to an embodiment of the present disclosure. As shown in FIGS. 23 to 25, optionally, the display module provided by the embodiments of the present disclosure further includes a second low refractive index layer 113 and a first adhesive layer 33. In the direction perpendicular to the plane on which the first substrate 11 is located, the second low refractive index layer 113 is located on a side of the functional layer 110 away from the electrophoretic layer 13, and the second low refractive index layer 113 is in contact with the first surface 110A. The refractive index of the second low refractive index layer 113 is n2, where n2 < n0.

The first adhesive layer 33 is located on a side of the second low refractive index layer 113 away from the functional layer 110, and the touch structure 31 is bonded to the second low refractive index layer 113 through the first adhesive layer 33.

Alternatively, the first adhesive layer 33 and the second low refractive index layer 113 are the same film layer, and the touch structure 31 is bonded to the functional layer 110 through the second low refractive index layer 113.

For the manner of setting the second low refractive index layer 113, reference may be made to any of the above embodiments, and the details are not repeated here.

As shown in FIG. 25, in the embodiments, the first adhesive layer 33 may be disposed between the second low refractive index layer 113 and the touch structure 31 so that the touch structure 31 is bonded to the second low refractive index layer 113 through the first adhesive layer 33. Through the above setting, the first adhesive layer 33 and the second low refractive index layer 113 may be made of different materials to achieve adhesive performance and low refractive index performance, respectively, and the selection of the materials of the first adhesive layer 33 and the second low refractive index layer 113 may be more extensive.

The material of the first adhesive layer 33 may include a transparent material such as an optically clear adhesive (OCA) or a pressure-sensitive adhesive (PSA). Such a material may achieve a relatively high transmittance while providing great adhesive performance, thereby reducing the light loss of the light beam caused by the first adhesive layer 33 and improving the display brightness and the contrast of the display module.

Optionally, the thickness of the second low refractive index layer 113 is greater than or equal to 100nm. In this manner, the second low refractive index layer 113 has a sufficient thickness to form a total reflection interface, thereby ensuring the transmission efficiency of the light beam in the interior of the functional layer 110.

Further, the thickness of the second low refractive index layer 113 is less than or equal to 2000nm to prevent the second low refractive index layer 113 from affecting the overall thickness of the display module. Moreover, the second low refractive index layer 113 may be formed on the first surface 110A of the functional layer 110 by using a coating process. Thus, the thickness of the second low refractive index layer 113 is set to be less than or equal to 2000nm, which can reduce the process difficulty and the manufacturing cost.

With continued reference to FIG. 24, optionally, the first adhesive layer 33 and the second low refractive index layer 113 may be the same film layer, that is, the touch structure 31 and the functional layer 110 are directly bonded to each other through the second low refractive index layer 113. At this point, the second low refractive index layer 113 achieves both adhesive performance and low refractive index performance, thereby reducing the number of film layers and reducing the thickness of the display module.

The material of the second low refractive index layer 113 may include a transparent material such as an optically clear adhesive (OCA) or a pressure-sensitive adhesive (PSA). Such a material may satisfy the requirements of low refractive index and high transmittance while achieving great adhesive performance.

Optionally, the thickness of the second low refractive index layer 113 is greater than or equal to 50µm to achieve sufficient adhesive performance, thereby improving the reliability of the bonding between the touch structure 31 and the functional layer 110.

Further, the thickness of the second low refractive index layer 113 is less than or equal to 250µm to prevent the second low refractive index layer 113 from affecting the overall thickness of the display module.

With continued reference to FIGS. 23 to 25, optionally, the display module may further include a third adhesive layer 32 and a cover plate 18. The cover plate 18 is located on a side of the touch structure 31 facing away from the electrophoretic layer 13. The third adhesive layer 32 is located between the touch structure 31 and the cover plate 18 to bond the touch structure 31 and the cover plate 18 through the third adhesive layer 32. The cover plate 18 may be used for protecting the display module from being affected by the external environment and may improve the overall mechanical strength of the display module, thereby reducing the risk of damage when the display module is impacted by external forces during use.

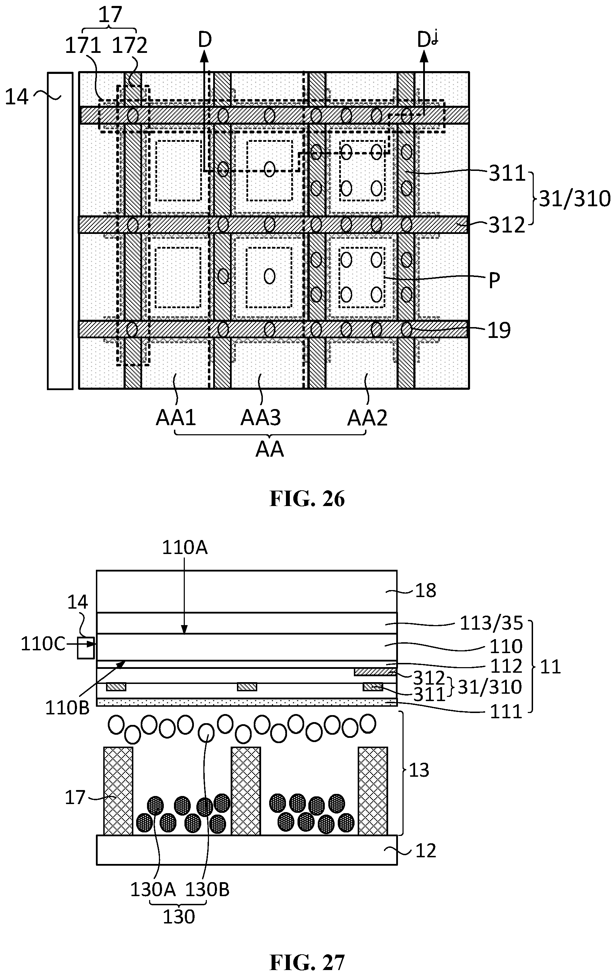

FIG. 26 is another structure view of a display module according to an embodiment of the present disclosure, and FIG. 27 is a sectional view taken along D-D' in FIG. 26. As shown in FIGS. 26 and 27, optionally, the first substrate 11 further includes a touch structure 31. The touch structure 31 is located between the functional layer 110 and the electrophoretic layer 13.

The touch structure 31 is used for achieving a touch function.

Specifically, as shown in FIGS. 26 and 27, by disposing the touch structure 31 between the functional layer 110 and the electrophoretic layer 13, the touch structure 31 is integrated into the first substrate 11. The touch structure 31 may be directly prepared on the surface of the first low reflective index layer 112 facing away from the functional layer 110. In this manner, no optical adhesive layer is required to bond the touch structure 31 and the first substrate 11. The thickness of the optical adhesive layer used for bonding the touch structure 31 may be reduced, thereby reducing the overall thickness of the display module and achieving the design of lightness and thinness.

With continued reference to FIG. 27, the common electrode layer 111 may be disposed on a side of the touch structure 31 facing the electrophoretic layer 13. In this manner, the distance between the common electrode layer 111 and the electrophoretic layer 13 may be relatively short, the intensity of the electric field formed in the electrophoretic layer 13 is improved, and the moving speed of the electrophoretic particles 130 is accelerated, thereby improving the display refresh rate of the display module.

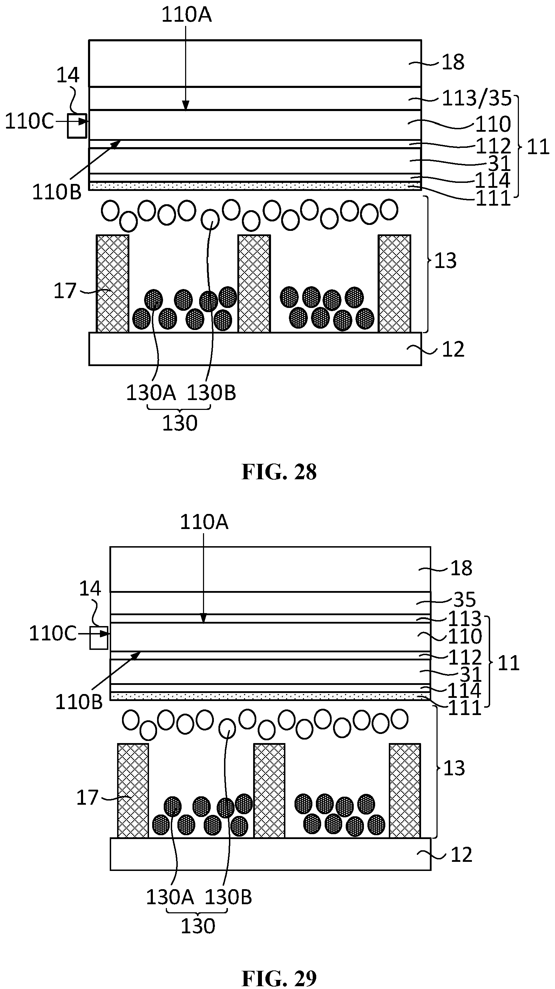

FIG. 28 is another partial sectional view of a display module according to an embodiment of the present disclosure. As shown in FIG. 28, optionally, the first substrate 11 further includes an insulating protective layer 114. The insulating protective layer 114 is located between the touch structure 31 and the electrophoretic layer 13.

As shown in FIG. 28, an insulating protective layer 114 is disposed between the touch structure 31 and the electrophoretic layer 13, and the insulating protective layer 114 is used for insulating and protecting the touch structure 31.

Further, as shown in FIG. 28, the common electrode layer 111 may be disposed on a side of the insulating protective layer 114 facing the electrophoretic layer 13. In this manner, the distance between the common electrode layer 111 and the electrophoretic layer 13 may be relatively short, the intensity of the electric field formed in the electrophoretic layer 13 is improved, and the moving speed of the electrophoretic particles 130 is accelerated, thereby improving the display refresh rate of the display module.

Optionally, the refractive index of the insulating protective layer 114 is n4, where n4 > n1.

Specifically, as shown in FIG. 28, the light beam emitted by the light source 14 is guided by the functional layer 110, transmitted through the first low refractive index layer 112 and the insulating protective layer 114, and then illuminated on the electrophoretic layer 13.

In the embodiments, by setting the refractive index n4 of the insulating protective layer 114 to be greater than the refractive index n1 of the first low refractive index layer 112, the light beam entering the first low refractive index layer 112 may be more easily transmitted through the insulating protective layer 114. In this manner, the light emission efficiency of the functional layer 110 toward the electrophoretic layer 13 is improved, and more light is transmitted or reflected by the electrophoretic layer 13, thereby improving the definition of the display content.

Moreover, by setting the refractive index n4 of the insulating protective layer 114 to be greater than the refractive index n1 of the first low refractive index layer 112, the incident angle of the light beam incident on the electrophoretic layer 13 may further be reduced. In this manner, the light beam illuminated on the electrophoretic layer 13 is closer to the normal. Thus, the emergence angle of the light beam reflected or transmitted by the electrophoretic layer 13 to the human eyes may be improved, and the numbers of reflections and scattering of the light beam in the electrophoretic layer 13 may be reduced, thereby reducing the light loss and improving the definition and the contrast of the display content.

Optionally, the first substrate 11 further includes a first low refractive index layer 112. In the direction perpendicular to the plane on which the first substrate 11 is located, the first low refractive index layer 112 is located on a side of the functional layer 110 facing the electrophoretic layer 13, and the first low refractive index layer 112 is in contact with the second surface 110B. The refractive index of the functional layer 110 is n0, and the refractive index of the first low refractive index layer 112 is n1, where n1 < n0, and 0.2 ≤ n4 - n1 ≤ 0.5.

By setting the refractive index n4 of the insulating protective layer 114 to be at least 0.2 greater than the refractive index n1 of the first low refractive index layer 112, the insulating protective layer 114 and the first low refractive index layer 112 may have a sufficient refractive index difference so that the light beam entering the first low refractive index layer 112 may be more easily transmitted through the insulating protective layer 114. In this manner, the light emission efficiency of the functional layer 110 toward the electrophoretic layer 13 is improved, and more light is transmitted or reflected by the electrophoretic layer 13, thereby improving the definition of the display content.

Moreover, the incident angle of the light beam incident on the electrophoretic layer 13 may further be reduced. In this manner, the light beam illuminated on the electrophoretic layer 13 is closer to the normal. Thus, the emergence angle of the light beam reflected or transmitted by the electrophoretic layer 13 to the human eyes may be improved, and the numbers of reflections and scattering of the light beam in the electrophoretic layer 13 may be reduced, thereby reducing the light loss and improving the definition and the contrast of the display content.

Further, by setting the difference between the refractive index n4 of the insulating protective layer 114 and the refractive index n1 of the first low refractive index layer 112 to be less than or equal to 0.5, the selection of the materials of the insulating protective layer 114 and the first low refractive index layer 112 may be more extensive and more practical.

Optionally, the refractive index n4 of the insulating protective layer 114 satisfies the condition that 1.5 ≤ n4 ≤ 1.8. By setting the refractive index n4 of the insulating protective layer 114 to be greater than or equal to 1.5, the insulating protective layer 114 and the first low refractive index layer 112 may have a relatively large refractive index difference, and the light emission efficiency of the functional layer 110 toward the electrophoretic layer 13 is improved, thereby improving the definition and the contrast of the display content. Moreover, by setting the refractive index n4 of the insulating protective layer 114 to be less than or equal to 1.8, the selection of the material of the insulating protective layer 114 may be more extensive and more practical.

Optionally, the thickness of the insulating protective layer 114 is greater than or equal to 1µm to provide great insulation and protection.

Further, the thickness of the insulating protective layer 114 is less than or equal to 4 µm to prevent the second low refractive index layer 113 from affecting the overall thickness of the display module.

Optionally, the material of the insulating protective layer 114 includes an OC or other organic materials to achieve the transmittance of 90% and above while providing great insulation and protection, but is not limited thereto. In other embodiments, the first low refractive index layer 112 may be made of an inorganic material, which is not specifically limited in the embodiments of the present disclosure.

FIG. 29 is another partial sectional view of a display module according to an embodiment of the present disclosure. As shown in FIGS. 27 to 29, optionally, the display module provided by the embodiments of the present disclosure further includes a second low refractive index layer 113, a second adhesive layer 35, and a cover plate 18. In the direction perpendicular to the plane on which the first substrate 11 is located, the second low refractive index layer 113 is located on a side of the functional layer 110 facing away from the electrophoretic layer 13, and the second low refractive index layer 113 is in contact with the first surface 110A. The refractive index of the second low refractive index layer 113 is n2, where n2 < n0. In the direction perpendicular to the plane on which the first substrate 11 is located, the cover plate 18 is located on a side of the second adhesive layer 35 facing away from the electrophoretic layer 13.

The second adhesive layer 35 is located on a side of the second low refractive index layer 113 facing away from the functional layer 110, and the cover plate 18 is bonded to the second low refractive index layer 113 through the second adhesive layer 35.

Alternatively, the second adhesive layer 35 and the second low refractive index layer 113 are the same film layer, and the cover plate 18 is bonded to the functional layer 110 through the second low refractive index layer 113.

For the manner of setting the second low refractive index layer 113, reference may be made to any of the above embodiments, and the details are not repeated here.

As shown in FIG. 29, in the embodiments, the second adhesive layer 35 may be disposed between the second low refractive index layer 113 and the cover plate 18 so that the cover plate 18 is bonded to the second low refractive index layer 113 through the second adhesive layer 35. Through the above setting, the second adhesive layer 35 and the second low refractive index layer 113 may be made of different materials to achieve adhesion performance and low refractive index performance, respectively. The selection of the materials of the second adhesive layer 35 and the second low refractive index layer 113 may be more extensive.

The material of the second adhesive layer 35 may include a transparent material such as an optically clear adhesive (OCA) or a pressure-sensitive adhesive (PSA). Such a material may achieve a relatively high transmittance while achieving great adhesive performance, thereby reducing the light loss of the light beam caused by the second adhesive layer 35 and improving the display brightness and the contrast of the display module.

Optionally, the thickness of the second low refractive index layer 113 is greater than or equal to 100 nm. In this manner, the second low refractive index layer 113 has a sufficient thickness to form a total reflection interface, thereby ensuring the transmission efficiency of the light beam in the interior of the functional layer 110.

Further, the thickness of the second low refractive index layer 113 is less than or equal to 2000 nm to prevent the second low refractive index layer 113 from affecting the overall thickness of the display module. Moreover, the second low refractive index layer 113 may be formed on the first surface 110A of the functional layer 110 by using a coating process. Thus, the thickness of the second low refractive index layer 113 is set to be less than or equal to 2000 nm, which may reduce the process difficulty and the manufacturing cost.

With continued reference to FIGS. 27 and 28, optionally, the second adhesive layer 35 and the second low refractive index layer 113 may be the same film layer, that is, the cover plate 18 and the functional layer 110 are directly bonded to each other through the second low refractive index layer 113. In this manner, the second low refractive index layer 113 achieves both adhesive performance and low refractive index performance, thereby reducing the number of film layers and reducing the thickness of the display module.

The material of the second low refractive index layer 113 may include a transparent material such as an optically clear adhesive (OCA) or a pressure-sensitive adhesive (PSA). Such a material may satisfy the requirements of low refractive index and high transmittance while achieving great adhesive performance.

Optionally, the thickness of the second low refractive index layer 113 is greater than or equal to 50 µm to achieve sufficient adhesive performance, thereby improving the reliability of the bonding between the cover plate 18 and the functional layer 110.

Further, the thickness of the second low refractive index layer 113 is less than or equal to 250 µm to prevent the second low refractive index layer 113 from affecting the overall thickness of the display module.

With continued reference to FIGS. 23 to 27, optionally, a cofferdam structure 17 is disposed between the first substrate 11 and the second substrate 12. The display module further includes a touch structure 31, and the touch structure 31 includes a touch electrode 310. In the direction perpendicular to the plane on which the first substrate 11 is located, the cofferdam structure 17 at least partially overlaps the touch electrode 310.

For the manner of setting the cofferdam structure 17 and the touch electrode 310, reference may be made to any of the above embodiments, and the details are not repeated here.

As shown in FIGS. 23 to 27, the following is described by using an example where the touch structure 31 adopts a mutual capacitive touch structure. The touch electrode 310 in the touch structure 31 may include multiple first touch electrodes 311 and multiple second touch electrodes 312. The multiple first touch electrodes 311 and the multiple second touch electrodes 312 are disposed crosswise, and the first touch electrodes 311 and the second touch electrodes 312 are insulated from each other. The display module may generate touch information based on the capacitance change between the first touch electrodes 311 and the second touch electrodes 312, thereby achieving the touch function. However, the structure of the touch structure 31 is not limited thereto.

As shown in FIGS. 23 to 27, in the embodiments, the cofferdam structure 17 at least partially overlaps the touch electrode 310 in the direction perpendicular to the plane on which the first substrate 11 is located, to reduce the overlapping area between the touch electrode 310 and the pixel P. Thus, the interference of the touch electrode 310 with the light beam emitted by the pixel P may be reduced, thereby improving the display effect.

The width of the touch electrode 310 may be less than or equal to the width of the cofferdam structure 17. In this manner, the area of the touch electrode 310 covered by the cofferdam structure 17 in the direction perpendicular to the plane on which the first substrate 11 is located is increased, and the overlapping area between the touch electrode 310 and the pixel P may be further reduced. Thus, the interference of the touch electrode 310 with the light beam emitted by the pixel P may be further reduced, thereby improving the display effect.

With continued reference to FIGS. 23 to 27, optionally, multiple dot structures 19 are disposed on the first surface 110A of the functional layer 110. In the direction perpendicular to the plane on which the first substrate 11 is located, an overlapping region exists among the cofferdam structure 17, the touch electrode 310, and the dot structures 19.

For the manner of setting the dot structure 19, the cofferdam structure 17, and the touch electrode 310, reference may be made to any of the above embodiments, and the details are not repeated here.

As shown in FIGS. 23 to 27, in the embodiments, in the direction perpendicular to the plane on which the first substrate 11 is located, an overlapping region exists among the cofferdam structure 17, the touch electrode 310, and the dot structures 19, to reduce the overlapping area between the touch electrode 310 and the pixel P and the overlapping area between the dot structures 19 and the pixels P. Thus, the interference of the touch electrodes 310 and the dot structures 19 with the light beams emitted by the pixels P may be reduced, thereby improving the display effect.

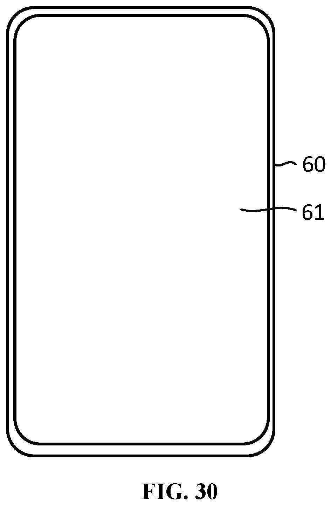

Based on the same inventive concept, the embodiments of the present disclosure further provide a display device. FIG. 30 is a structure view of a display device according to an embodiment of the present disclosure. As shown in FIG. 30, the display device 60 includes the display module 61 described in any of the embodiments of the present disclosure. Structures and terms that are the same as or correspond to those in the above embodiments are not re-explained here.

The display device 60 provided by the embodiments of the present disclosure may be a cellphone shown in FIG. 30 or may be any electronic product having a display function. The electronic product includes, but is not limited to, an electronic book, a television, a notebook computer, a desktop display, a tablet, a digital camera, a smart bracelet, smart glasses, an in-vehicle display, a medical device, an industrial control device or a touch interactive terminal, which is not specifically limited in the embodiments of the present disclosure.

It is to be understood that various forms of processes shown above may be adopted with steps reordered, added, or deleted. For example, the steps described in the present disclosure may be performed in parallel, sequentially, or in different sequences, as long as the desired results of the technical solutions of the present disclosure can be achieved, and no limitation is imposed herein.

## Claims

1. A display module, comprising:
a first substrate and a second substrate disposed opposite to each other;
an electrophoretic layer located between the first substrate and the second substrate;
wherein the first substrate comprises a functional layer, the functional layer comprises a first surface and a second surface disposed opposite to each other, and comprises a first side surface located between the first surface and the second surface, and the first surface is located on a side of the second surface facing away from the electrophoretic layer; and
a light source disposed opposite to the first side surface.

2. The display module according to claim 1, wherein
the first substrate further comprises a first low refractive index layer;
in a direction perpendicular to a plane on which the first substrate is located, the first low refractive index layer is located on a side of the functional layer facing the electrophoretic layer, and the first low refractive index layer is in contact with the second surface; and
a refractive index of the functional layer is n0, and a refractive index of the first low refractive index layer is n1, wherein n1 < n0.

3. The display module according to claim 2, wherein $0.2 \leq n 0 - n 1 \leq 0.5 .$

4. The display module according to claim 2, wherein
a thickness of the first low refractive index layer is H1, wherein 100 nm ≤ H1 ≤ 2000 nm.

5. The display module according to claim 1, wherein
the display module further comprises a second low refractive index layer;
in a direction perpendicular to a plane on which the first substrate is located, the second low refractive index layer is located on a side of the functional layer facing away from the electrophoretic layer, and the second low refractive index layer is in contact with the first surface; and
a refractive index of the second low refractive index layer is n2, wherein n2 < n0.

6. The display module according to claim 5, wherein $0.2 \leq n 0 - n 2 \leq 0.5 .$

7. The display module according to claim 5, wherein
the first substrate further comprises a first low refractive index layer;
in a direction perpendicular to a plane on which the first substrate is located, the first low refractive index layer is located on a side of the functional layer facing the electrophoretic layer, and the first low refractive index layer is in contact with the second surface; and
a refractive index of the functional layer is n0, and a refractive index of the first low refractive index layer is n1, wherein n1 < n0, and |n2 - n1| ≤ 0.1.

8. The display module according to claim 5, wherein
the first substrate further comprises a first low refractive index layer;
in a direction perpendicular to a plane on which the first substrate is located, the first low refractive index layer is located on a side of the functional layer facing the electrophoretic layer, and the first low refractive index layer is in contact with the second surface; and
a refractive index of the functional layer is n0, and a refractive index of the first low refractive index layer is n1, wherein n1 < n0, and n0 - n2 ≥ n0 - n1.

9. The display module according to claim 5, wherein
the first substrate further comprises a first low refractive index layer;
in a direction perpendicular to a plane on which the first substrate is located, the first low refractive index layer is located on a side of the functional layer facing the electrophoretic layer, and the first low refractive index layer is in contact with the second surface; and
a refractive index of the functional layer is n0, and a refractive index of the first low refractive index layer is n1, wherein n1 < n0, and n0 - n2 ≤ n0 - n1.

10. The display module according to claim 8 or 9, wherein $\left|n1-n2\right| \leq \left|n0-n1\right| ;$ or $\left|n1-n2\right| \leq \left|n0-n2\right| ;$ or $\left|n1-n2\right| \leq \left|n0-n1\right| and \left|n1-n2\right| \leq \left|n0-n2\right| .$

11. The display module according to claim 5, wherein
the first substrate further comprises a first low refractive index layer;
in a direction perpendicular to a plane on which the first substrate is located, the first low refractive index layer is located on a side of the functional layer facing the electrophoretic layer, and the first low refractive index layer is in contact with the second surface; and
a thickness of the second low refractive index layer is greater than or equal to a thickness of the first low refractive index layer.

12. The display module according to claim 2, wherein
the first substrate further comprises a common electrode layer, and the common electrode layer is located on a side of the functional layer facing the electrophoretic layer; and
a refractive index of the common electrode layer is n3, wherein n3 > n1.

13. The display module according to claim 12, wherein $0.2 \leq n 3 - n 1 \leq 0.5 .$

14. The display module according to claim 1, wherein
a plurality of dot structures are disposed on the first surface of the functional layer, and the plurality of dot structures comprises a groove structure and/or a protrusion structure.

15. The display module according to claim 14, wherein
a cofferdam structure is disposed between the first substrate and the second substrate; and
in a direction perpendicular to a plane on which the first substrate is located, the cofferdam structure at least partially overlaps the plurality of dot structures.

16. The display module according to claim 14, wherein
a cofferdam structure is disposed between the first substrate and the second substrate; and
in a first direction, a length of a dot structure of the plurality of dot structures is D1, and the cofferdam structure has a length D2, wherein D1 < D2, and the first direction is parallel to the plane on which the first substrate is located.

17. The display module according to claim 14, wherein
a display region of the display module comprises a first display region and a second display region, and the first display region is located on a side of the second display region facing the light source; and
a density of the plurality of dot structures in the first display region is less than a density of the plurality of dot structures in the second display region.

18. The display module according to claim 14, wherein
a display region of the display module comprises a first display region and a second display region, and the first display region is located on a side of the second display region facing the light source;
in the first display region, a spacing between adjacent two of the plurality of dot structures in a second direction is D3; and
in the second display region, a spacing between adjacent two of the plurality of dot structures in the second direction is D4;
wherein D3 > D4, and the second direction is parallel to a plane on which the first substrate is located.

19. The display module according to claim 15, wherein
the plurality of dot structures are arranged in an array;
the cofferdam structure comprises a plurality of first block walls and a plurality of second block walls;
the plurality of first block walls extend in a third direction and are arranged in a fourth direction;
the plurality of second block walls extend in the fourth direction and are arranged in the third direction;
the third direction intersects the fourth direction;
in the third direction, a distance between adjacent ones of the plurality of dot structures is Cx, a spacing between adjacent ones of the plurality of second block walls is Ax, and a width of a second block wall of the plurality of second block walls is Bx; and
in the fourth direction, a distance between adjacent ones of the plurality of dot structures is Cy, a spacing between adjacent ones of the plurality of first block walls is Ay, and a width of a first block wall of the plurality of first block walls is By;
wherein Cx ≤ (Ax + Bx)/N, Cy ≤ (Ay + By)/N, and N is a positive integer greater than 0.

20. The display module according to claim 1, wherein
the first substrate is located on a light emission side of the display module.

21. The display module according to claim 20, wherein
the display module further comprises a touch structure; and
the touch structure is located on a side of the first substrate facing away from the electrophoretic layer.

22. The display module according to claim 21, wherein
the display module further comprises a second low refractive index layer and a first adhesive layer;
wherein in a direction perpendicular to a plane on which the first substrate is located, the second low refractive index layer is located on a side of the functional layer facing away from the electrophoretic layer, and the second low refractive index layer is in contact with the first surface;
a refractive index of the second low refractive index layer is n2, wherein n2 < n0; and
the first adhesive layer is located on a side of the second low refractive index layer facing away from the functional layer, and the touch structure is bonded to the second low refractive index layer through the first adhesive layer;
or
wherein the first adhesive layer and the second low refractive index layer are a same film layer, and the touch structure is bonded to the functional layer through the second low refractive index layer.

23. The display module according to claim 20, wherein
the display module further comprises a touch structure; and
the touch structure is located between the functional layer and the electrophoretic layer.

24. The display module according to claim 23, wherein
the first substrate further comprises an insulating protective layer; and
the insulating protective layer is located between the touch structure and the electrophoretic layer.

25. The display module according to claim 24, wherein
the first substrate further comprises a first low refractive index layer;
in a direction perpendicular to a plane on which the first substrate is located, the first low refractive index layer is located on a side of the functional layer facing the electrophoretic layer, and the first low refractive index layer is in contact with the second surface; and
a refractive index of the functional layer is n0, a refractive index of the first low refractive index layer is n1, and a refractive index of the insulating protective layer is n4, wherein n1 < n0, and 0.2 ≤ n4 - n1 ≤ 0.5.

26. The display module according to claim 23, wherein
the display module further comprises a second low refractive index layer, a second adhesive layer, and a cover plate;
wherein in a direction perpendicular to a plane on which the first substrate is located, the second low refractive index layer is located on a side of the functional layer facing away from the electrophoretic layer, and the second low refractive index layer is in contact with the first surface;
a refractive index of the functional layer is n0, a refractive index of the second low refractive index layer is n2, wherein n2 < n0;
in the direction perpendicular to the plane on which the substrate is located, the cover plate is located on a side of the second adhesive layer facing away from the electrophoretic layer; and
the second adhesive layer is located on a side of the second low refractive index layer facing away from the functional layer, and the cover plate is bonded to the second low refractive index layer through the second adhesive layer;
or
wherein the second adhesive layer and the second low refractive index layer are a same film layer, and the cover plate is bonded to the functional layer through the second low refractive index layer.

27. The display module according to claim 1, wherein
a cofferdam structure is disposed between the first substrate and the second substrate;
the display module further comprises a touch structure, and the touch structure comprises a touch electrode; and
in a direction perpendicular to a plane on which the first substrate is located, the cofferdam structure at least partially overlaps the touch electrode.

28. The display module according to claim 27, wherein
a plurality of dot structures are disposed on the first surface of the functional layer; and
in the direction perpendicular to the plane on which the first substrate is located, an overlapping region exists among the cofferdam structure, the touch electrode, and a dot structure of the plurality of dot structures.

29. A display device, comprising the display module according to any one of claims 1 to 28.
